# EUROPEAN PATENT SPECIFICATION

(11) **EP 2 212 146 B1**
(45) Date of publication and mention of the grant of the patent: **21.03.2012**
(21) Application number: 08855179.1
(22) Date of filing: 11.11.2008
(51) Int. Cl.: B60K 17/346

(54) **VEHICLE TRANSFER**
FAHRZEUGVERTEILER
TRANSFERT DE VÉHICULE

(30) Priority: 27.11.2007 JP 2007306018
(43) Date of publication of application: 04.08.2010
(73) Proprietor: Toyota Jidosha Kabushiki Kaisha, Toyota-shi, Aichi 471-8571 (JP)
(72) Inventor: YOSHIMURA, Takahiro, Toyota-shi Aichi 471-8571 (JP)
(74) Representative: TBK
(86) International application number: PCT/JP2008/003261
(87) International publication number: WO 2009/069255

(56) References cited:
- JP-A- 61 082 050
- JP-A- 2005 047 381
- JP-A- 2005 106 202
- US-A- 2 064 262
- US-A- 2 213 981
- US-A- 3 146 842

## Description

### Technical Field

The present invention relates to a vehicle transfer.

### Background Art

Conventionally, various systems in a vehicle have been conceived, such as part-time four-wheel drive systems, full-time four-wheel drive systems, and standby four-wheel drive systems.

A part-time four-wheel drive system makes it possible to change to a two-wheel drive mode or a four-wheel drive mode. This system is capable of transmitting adequate driving force to four wheels, and therefore is applied when traveling on a low mu road face such as a rough road, for example, but on the other hand, when traveling through a curve of a comparatively high mu road face such as asphalt, for example, a rotation differential between the front wheels and the rear wheels becomes large and thus a braking phenomenon occurs in the vehicle. Also, so-called circulation torque accumulates in a drive mechanism, so the drive mechanism enters a high load state, which is not preferable for vehicle travel performance and strength of the drive mechanism.

A full-time four-wheel drive system is always in four-wheel drive mode. This system is generally provided with a differential mechanism such as a center differential in a transfer, for example, in order to absorb the rotation differential between the front wheels and the rear wheels. In this case, when traveling through a curve of a comparatively high mu road face such as asphalt, for example, the differential mechanism absorbs a difference in the number of revolutions between the front wheels and the rear wheels that accompanies a difference in turn radius between the front wheels and the rear wheels, so the above sort of braking phenomenon does not occur.

In a standby four-wheel drive system, two-wheel drive mode is always selected, but when the drive wheels are idle, drive power is also transmitted to the remaining driven wheels.

Incidentally, in the configuration of some conventional four-wheel drive vehicle transfers, by providing an auxiliary transmission, in the four-wheel drive mode, it is possible to change between a high speed range and a low speed range (for example, see Patent Citations 1 and 2).

The range change is performed by a driver manually operating an operation input means such as a range select lever.

However, the range change is allowable only in a state in which power transmission from an input shaft of the transfer to a rear wheel side output shaft or a front wheel side output shaft is blocked. In other words, an example of a condition in which range change is possible is when a transmission (main transmission) is in a neutral position.

In a vehicle equipped with this sort of transfer, a configuration may be adopted in which in order to perform a range change during vehicle travel, the transmission is temporarily put in the neutral position by manually operating a shift change lever, and then a change to the desired range is performed by manually operating the range select lever. However, in this case, operation by the driver is complicated and bothersome, so it is difficult to smoothly drive on various kinds of roads.

To address such a case, it is conceivable to adopt a power transmission mechanism in which a range change can be performed during travel, without performing a wasteful operation that has no direct relationship to the range change (for example, see Patent Citation 3).

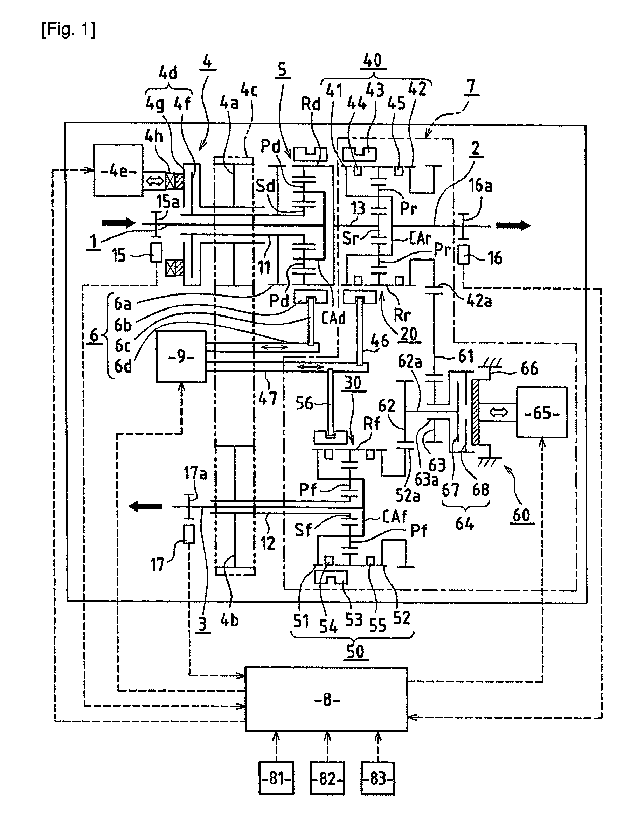

Patent Citation 3 discloses a configuration in which, as shown in Fig. 1 of that disclosure, a planetary gear apparatus 4 is provided as an auxiliary transmission in an input shaft 2, and on the upstream side from this planetary gear apparatus 4, a range switching clutch C1 and a brake B1 are provided, and further, a mode switching clutch C2 is provided in a first output shaft (rear wheel side output shaft) 3 that is disposed coaxially to the input shaft 2.

The range switching clutch C1 and the brake B1 switch between a high speed range and a low speed range by changing the power transmission path of the planetary gear apparatus 4.

The clutch C1 switches a sun gear and a carrier of the planetary gear apparatus 4 to state in which they rotate together or a state in which they rotate relative to each other, and the brake B 1 switches the ring gear of the planetary gear apparatus 4 to a rotatable state or a non-rotatable state. In the high speed range, the clutch C1 is engaged and the brake B 1 is released, thus putting the input shaft 2 and the first output shaft 3 in a state of direct connection. In the low speed range, the clutch C 1 is released and the brake B 1 is engaged, thus reducing the rotational power input to the input shaft 2 with the planetary gear apparatus 4 and transmitting that power to the first output shaft 3.

Also, the mode switching multi-plate clutch C2 switches between the two-wheel drive mode and the four-wheel drive mode. In the two-wheel drive mode, a blocked state is established in which rotational power of the first output shaft 3 is not transmitted to a second output shaft (front wheel side output shaft) 5. In the four-wheel drive mode, rotational power of the first output shaft 3 is transmitted to the second output shaft 5.

| | |
|---|---|
| Patent Citation 1: | JP 2005-47381A |
| Patent Citation 2: | JP 2005-106202A |
| Patent Citation 3: | JP S61-82050 A |

Document US 2064262 A discloses an axle construction comprising a transfer having the features of the preamble of claim 1.

### Disclosure of Invention

### Technical Problem

In the case of the conventional example according to above Patent Citation 3, although range switching can be performed during travel, without performing a wasteful operation that has no direct relationship to the range switching, there are the following concerns.

To begin with, in Patent Citation 3, the clutch C1 and the single planetary gear apparatus 4 (auxiliary transmission) are disposed on the upstream side in the input direction of rotational power, so that rotational power that has been input to the input shaft is gearshifted and then transmitted to the two output shafts. Also, the clutch C1 and the brake B 1, which provide a configuration necessary for realizing the range switching function, primarily serve a role of linking or separating the input shaft 2 where transmission output is being input during travel and the first output shaft 3 that, for example, is linked to a rear wheel axle, and so it is necessary to increase their transmission torque capacity as much as possible.

Therefore, there is a concern that weight will increase as, for example, the diameter of friction plates of the clutch C1 and the brake B1 is enlarged and it becomes necessary to increase the number of friction plates used, and that size in the radial direction will increase. In particular, because the brake B 1 is disposed on the outer diameter side of the ring gear of the planetary gear apparatus 4, it is necessary to increase the outer diameter size so as to have a large braking torque capacity, with the result that weight naturally increases.

For such reasons, there is a concern that the ability to mount the power transmission mechanism of above Patent Citation 3 in a vehicle will be poor. Also, when there are restrictions such that it is not possible to secure an installation space for the power transmission mechanism in the vehicle, for example, difficulties arise such as not being able to mount the power transmission mechanism. There is room for improvement with respect to this point

It is an object of the invention to provide a comparatively small and light structure for a vehicle transfer that is capable of switching between a two-wheel drive mode and a four-wheel drive mode, and is capable of gearshifting rotational power (for example, changing from a high speed range to a low speed range, or changing from the low speed range to the high speed range). The object of the invention is achieved by a vehicle transfer according to claim 1. Advantageous embodiments are carried out according to the dependent claims.

### Technical Solution

The vehicle transfer of the present invention is provided with a power distribution mechanism for securing a two-wheel drive power transmission path that allows rotational power that is input to an input shaft to be output from only a first output shaft that is disposed coaxially to the input shaft, or a four-wheel drive power transmission path that allows the rotational power that is input to the input shaft to be output from both the first output shaft and a second output shaft that is disposed parallel to the first output shaft; and an auxiliary gearshift mechanism for gearshifting rotational power transmitted from the input shaft to the first output shaft or the first output shaft and the second output shaft; in which the auxiliary gearshift mechanism includes a first auxiliary transmission that is disposed in the first output shaft, a second auxiliary transmission that is disposed in the second output shaft, and a setting apparatus that causes the first auxiliary transmission and the second auxiliary transmission to perform gearshift operations as required.

With this configuration, in essence, it is possible to select between a so-called two-wheel drive mode and four-wheel drive mode, and it is possible to gearshift rotational power (for example, changing from a high speed range to a low speed range, or changing from the low speed range to the high speed range).

Also, with respect to the above sort of auxiliary gearshift mechanism for gearshifting rotational power, two auxiliary transmissions are provided divided among two output shafts, so in the four-wheel drive mode, gearshifting is performed after rotational power is input to the input shaft and transmitted to each output shaft.

Thus, in comparison to a configuration in which, as with a conventional transfer, a clutch and a single auxiliary transmission are disposed on the upstream side in the input direction of rotational power, and rotational power input to an input shaft is gearshifted and then transmitted to two output shafts, it is possible to reduce as much as possible the transmission torque capacity required by two individual auxiliary transmissions.

Therefore, it is possible to reduce the size and weight of the transfer in comparison to the above conventional transfer, so it is possible to increase the ability to mount the transfer to a vehicle in comparison to a conventional transfer, and reduced size and weight are also advantageous for increasing design freedom of the interior space of the vehicle.

Moreover, due to being able to reduce the transmission torque capacity of two auxiliary transmissions as described above, assuming that for example, as a settings apparatus of an auxiliary transmission mechanism, a state change mechanism, is provided in order to perform gearshift operation of each auxiliary transmission, because it also becomes possible to reduce the capacity of the state change mechanism, particularly with respect to gearshift operation by the auxiliary gearshift mechanism, this gearshift operation can be performed during vehicle travel without stopping the vehicle.

Therefore, it becomes possible to perform a gearshift as necessary even during vehicle travel, unlike a conventional transfer in which when performing a gearshift operation it is necessary to stop the vehicle or establish a state in which rotational power is not input to the transfer from the main transmission. Accordingly, by mounting the transfer according to the present invention in a vehicle, it is possible to improve drivability, and this transfer is advantageous for driving on various road surfaces.

Also, it is preferable that in the vehicle transfer according to the present invention, in the above configuration, the first auxiliary transmission is a planetary gear mechanism that includes a sun gear that is joined as a single body with the input shaft, a ring gear that is disposed so as to be freely rotatable on the outer diameter side of the sun gear, a plurality of pinion gears that are disposed so as to be capable of turning and revolving between the sun gear and the ring gear, and a carrier that supports each of the pinion gears and is joined as a single body with the first output shaft; and the second auxiliary transmission is a planetary gear mechanism that includes a sun gear that is externally fitted to the second output shaft so as to be capable of rotating relative to the second output shaft and is joined as a single body with an output side sleeve that is linked so as to move in cooperation with the input shaft via a power transmission means, a ring gear that is disposed so as to be freely rotatable on the outer diameter side of the sun gear, a plurality of pinion gears that are disposed so as to be capable of turning and revolving between the sun gear and the ring gear, and a carrier that supports each of the pinion gears and is joined as a single body with the second output shaft; in which the setting apparatus has a configuration for, as required, switching to a state in which the ring gear of the respective first and second auxiliary transmissions is made freely rotatable, and then any two of the ring gear, the sun gear, and the carrier are linked as a single body, or to a state in which the ring gear of the respective first and second auxiliary transmissions is made non-rotatable, and then the ring gear, the sun gear, and the carrier are made capable of relative rotation.

By specifying the configuration of the first and second auxiliary transmissions and the setting apparatus in this way, the mode of gearshifting rotational power by the first and second auxiliary transmissions and the state when gearshifting by the setting apparatus is clear.

According to this configuration, in a state in which the ring gear is made freely rotatable and any two of the ring gear, the sun gear, and the carrier are linked as a single body, a state is established in which the sun gear, the carrier, and the ring gear all rotate as a single body, and the sun gear which is an input element and the carrier which is an output element are directly linked (high speed range).

On the other hand, in a state in which the ring gear is made non-rotatable, and the ring gear, the sun gear, and the carrier are made rotatable relative to each other, the pinion gears are driven to rotate and revolve by the sun gear which is the input element, and this revolving of the pinion gears is output from the carrier which is the output element, so a deceleration state (low speed range) is established.

Further, in the above configuration, it is preferable that the setting apparatus includes a low speed piece disposed so as to be freely rotatable on one side in the axial direction of each ring gear of the first and second auxiliary transmissions, a high speed piece that is disposed on the other side in the axial direction of each ring gear and is joined as a single body to the respective carriers of each auxiliary transmission, a sleeve that is disposed so as to be slidable in the axial direction so as to link or unlink each ring gear with each low speed piece or each high speed piece, a drive mechanism for sliding the sleeve, and a state change mechanism for putting each low speed piece in a freely rotatable state or in a non-rotatable state.

By specifying the constituent elements of the first and second auxiliary transmissions and the setting apparatus in this way, the mode of gearshifting rotational power by the first and second auxiliary transmissions and the state when gearshifting by the setting apparatus is clear.

According to this configuration, by establishing a state in which after each high speed piece and each ring gear are linked with each sleeve, each high speed piece and each low speed piece are made freely rotatable with the state change mechanism, a state is insured in which the input shaft is directly linked to the first output shaft and the second output shaft (high speed range).

On the other hand, by establishing a state in which after each high speed piece and each low speed piece are linked to each ring gear as a single body with each sleeve, each high speed piece and each low speed piece are made non-rotatable with the state change mechanism, a state is insured in which rotational power input to the input shaft is transmitted to the first output shaft and the second output shaft (low speed range).

In the above configuration, it is preferable that the state change mechanism includes a first gear that externally contacts and engages with the first auxiliary transmission low speed piece, a second gear that externally contacts and engages with the second auxiliary transmission low speed piece, a third gear that engages with the first gear and is disposed adjacent to the second gear in the axial direction and is externally provided at the center axis of the second gear so as to be rotatable relative to the second gear, a frictionally engaged clutch for establishing a released state in which the second gear and the third gear are separated so as to be rotatable relative to each other and an engaged state in which they are linked as a single body, and an actuator that releases or engages the clutch.

In this configuration, when the clutch is released, the third gear and the second gear are capable of rotating relative to each other, so a state is established in which the first gear and the second gear can independently rotate without interfering with each other. On the other hand, when the clutch is engaged, the third gear and the second gear are joined as a single body, so the rotational power that is input to the third gear engaged with the first gear and the direction of rotation that is input to the second gear are in opposite directions, and thus the rotational forces are in equilibrium, so rotation is not possible.

Thus, for example, in a circumstance in which the ring gear of the first auxiliary transmission and the low speed piece are linked as a single body with the sleeve, and the ring gear of the second auxiliary transmission and the low speed piece are linked as a single body with the sleeve, in the clutch released state, the ring gear of the first auxiliary transmission and the ring gear of the second auxiliary transmission are both freely rotatable, and in the clutch engaged state, the ring gear of the first auxiliary transmission and the ring gear of the second auxiliary transmission are both non-rotatable.

In the above configuration, it is preferable that the power distribution mechanism includes a drive sprocket that is externally provided to the input shaft so as to be relatively rotatable, a driven sprocket that is externally provided to the second output shaft so as to be relatively rotatable and is joined as a single body with a member for inputting rotational power to the second auxiliary transmission, a wheel-like member that is placed across both of the sprockets, a frictionally engaged clutch for establishing a released state in which the input shaft and the drive sprocket are separated so as to be rotatable relative to each other and an engaged state in which they are linked as a single body, and an actuator that releases the clutch when the two-wheel drive mode is required and engages the clutch when the four-wheel drive mode is required.

By specifying the configuration of the power distribution mechanism and the operation when switching the drive mode in this way, it is clear that design becomes comparatively easy when specifically implementing the power distribution mechanism, and such a configuration is also advantageous from the perspectives of production cost and installation space.

In this configuration, when the clutch is released, the input shaft and the drive sprocket rotate relative to each other, so the rotational power input to the input shaft is not input to the second auxiliary transmission. On the other hand, when the clutch is engaged, the input shaft and the drive sprocket rotate as a single body, so the rotational power input to the input shaft is input to the second auxiliary transmission.

Incidentally, the vehicle transfer according to the present invention may further be provided with a rotation differential absorption apparatus for distributing rotational power that is input to the input shaft to the first output shaft and the second output shaft so that the rotational power can be transmitted; and a switching mechanism for setting, as required, a free state in which a rotation differential absorption operation by the rotation differential absorption apparatus is made active, or a lock state in which that operation is made inactive.

With this configuration, in essence, it is possible to select between the two-wheel drive mode and the four-wheel drive mode, and it is possible to gearshift rotational power (for example, changing from the high speed range to the low speed range, or changing from the low speed range to the high speed range), and in addition, it is possible to switch between the rotation differential absorption operation being active or inactive.

Thus, when a rotation differential between the first output shaft and the second output shaft has occurred, it is possible to absorb this rotation differential, so it is possible to suppress or prevent the action of circulation toque on each constituent element linked to the first output shaft and the second output shaft.

Also, with respect to a transfer provided with the above rotation differential absorption apparatus, it is preferable that the rotation differential absorption apparatus is a center differential configured from a planetary gear mechanism that includes a sun gear that is joined as a single body with an input side sleeve that is externally fitted on the outer diameter side of the input shaft so as to be capable of relatively rotating, a ring gear that is disposed so as to be freely rotatable on the outer diameter side of the sun gear, a plurality of pinion gears that are disposed so as to be capable of turning and revolving between the sun gear and the ring gear, and a carrier that supports each of the pinion gears and is joined so as to be capable of rotating as a single body with the input shaft; and the switching mechanism includes a lock piece that is disposed on one side in the axial direction of the ring gear of the rotation differential absorption apparatus and is joined as a single body on the outer diameter side of the input side sleeve, a sleeve that is disposed so as to be slidable in the axial direction so as to link or unlink this lock piece with the ring gear of the rotation differential absorption apparatus, and a drive mechanism for sliding the sleeve.

By specifying the configuration of the rotation differential absorption apparatus in this way, the mode for absorbing the rotation differential becomes clear. Also, by specifying the configuration of the switching mechanism, the mode when switching the rotation differential absorption apparatus to the lock state or the free state becomes clear.

Further, with respect to a transfer provided with the above rotation differential absorption apparatus, it is preferable that the first auxiliary transmission is a planetary gear mechanism that includes a sun gear that is joined as a single body with a shaft that is provided in the center of the ring gear of the rotation differential absorption apparatus, a ring gear that is disposed so as to be freely rotatable on the outer diameter side of the sun gear, a plurality of pinion gears that are disposed so as to be capable of turning and revolving between the sun gear and the ring gear, and a carrier that supports each of the pinion gears and is joined as a single body with the first output shaft; and the second auxiliary transmission is a planetary gear mechanism that includes a sun gear that is externally fitted to the second output shaft so as to be capable of rotating relative to the second output shaft and is joined as a single body with an output side sleeve that is linked so as to move in cooperation with the input shaft via a power transmission means, a ring gear that is disposed so as to be freely rotatable on the outer diameter side of the sun gear, a plurality of pinion gears that are disposed so as to be capable of turning and revolving between the sun gear and the ring gear, and a carrier that supports each of the pinion gears and is combined as a single body with the second output shaft; in which the setting apparatus has a configuration for, as required, switching to a state in which the ring gear of the respective first and second auxiliary transmissions is made freely rotatable, and then any two of the ring gear, the sun gear, and the carrier are joined as a single body, or to a state in which the ring gear of the respective first and second auxiliary transmissions is made non-rotatable, and then the ring gear, the sun gear, and the carrier are made capable of relative rotation.

By specifying the constituent elements of the first and second auxiliary transmissions and the setting apparatus in this way, the mode of gearshifting rotational power by the first and second auxiliary transmissions and the state when gearshifting by the setting apparatus is clear.

According to this configuration, in a state in which the ring gear is made freely rotatable and any two of the ring gear, the sun gear, and the carrier are linked as a single body, a state is established in which the sun gear, the carrier, and the ring gear all rotate as a single body, and the sun gear which is an input element and the carrier which is an output element are directly linked (high speed range).

On the other hand, in a state in which the ring gear is made non-rotatable, and the ring gear, the sun gear, and the carrier are made rotatable relative to each other, the pinion gears are driven to rotate and revolve by the sun gear which is the input element, and this revolving of the pinion gears is output from the carrier which is the output element, so a deceleration state (low speed range) is established.

With respect to a transfer provided with the above rotation differential absorption apparatus, it is preferable that the setting apparatus includes: a low speed piece disposed so as to be freely rotatable on one side in the axial direction of each ring gear of the first and second auxiliary transmissions, a high speed piece that is disposed on the other side in the axial direction of each ring gear and is joined as a single body to the respective carriers of each auxiliary transmission, a sleeve that is disposed so as to be slidable in the axial direction so as to link or unlink each ring gear with each low speed piece or each high speed piece, a drive mechanism for sliding the sleeve, and a state change mechanism for putting each low speed piece in a freely rotatable state or in a non-rotatable state.

By specifying the constituent elements of the setting apparatus in this way, the mode of gearshifting rotational power by the first and second auxiliary transmissions and the state when gearshifting by the setting apparatus is clear.

According to this configuration, by establishing a state in which after each high speed piece and each ring gear are linked with each sleeve, each high speed piece and each low speed piece are made freely rotatable with the state change mechanism, a state is insured in which the input shaft is directly linked to the first output shaft and the second output shaft (high speed range).

On the other hand, by establishing a state in which after each high speed piece and each low speed piece are linked to each ring gear as a single body with each sleeve, each high speed piece and each low speed piece are made non-rotatable with the state change mechanism, a state is insured in which rotational power input to the input shaft is transmitted to the first output shaft and the second output shaft (low speed range).

With respect to a transfer provided with the above rotation differential absorption apparatus, it is preferable that the state change mechanism includes a first gear that externally contacts and engages with the first auxiliary transmission low speed piece, a second gear that externally contacts and engages with the second auxiliary transmission low speed piece, a third gear that engages with the first gear and is disposed adjacent to the second gear in the axial direction and is externally provided at the center axis of the second gear so as to be rotatable relative to the second gear, a frictionally engaged clutch for establishing a released state in which the second gear and the third gear are separated so as to be rotatable relative to each other and an engaged state in which they are linked as a single body, and an actuator that releases or engages the clutch.

In this configuration, when the clutch is released, the third gear and the second gear are capable of rotating relative to each other, so a state is established in which the first gear and the second gear can independently rotate without interfering with each other. On the other hand, when the clutch is engaged, the third gear and the second gear are joined as a single body, so the rotational power that is input to the third gear engaged with the first gear and the direction of rotation that is input to the second gear are in opposite directions, and thus the rotational forces are in equilibrium, so rotation is not possible.

Thus, for example, in a circumstance in which the ring gear of the first auxiliary transmission and the low speed piece are linked as a single body with the sleeve, and the ring gear of the second auxiliary transmission and the low speed piece are linked as a single body with the sleeve, in the clutch released state, the ring gear of the first auxiliary transmission and the ring gear of the second auxiliary transmission are both freely rotatable, and in the clutch engaged state, the ring gear of the first auxiliary transmission and the ring gear of the second auxiliary transmission are both non-rotatable.

With respect to a transfer provided with the above rotation differential absorption apparatus, it is preferable that the power distribution mechanism includes a drive sprocket that is externally provided so as to be rotatable relative to the input side sleeve, a driven sprocket that is externally provided so as to be rotatable relative to the second output shaft and is joined as a single body with a member for inputting rotational power to the second auxiliary transmission, a wheel-like member that is placed across both of the sprockets, a frictionally engaged clutch for establishing a released state in which the input side sleeve and the drive sprocket are separated so as to be rotatable relative to each other and an engaged state in which they are linked as a single body, and an actuator that releases the clutch when the two-wheel drive mode is required and engages the clutch when the four-wheel drive mode is required.

By specifying the configuration of the power distribution mechanism and the operation when switching the drive mode in this way, it is clear that design becomes comparatively easy when specifically implementing the power distribution mechanism, and such a configuration is also advantageous from the perspectives of production cost and installation space.

In this configuration, when the clutch is released, the input shaft and the drive sprocket rotate relative to each other, so the rotational power input to the input shaft is not input to the second auxiliary transmission. On the other hand, when the clutch is engaged, the input shaft and the drive sprocket rotate as a single body, so the rotational power input to the input shaft is input to the second auxiliary transmission.

Incidentally, the vehicle transfer according to the present invention may further be provided with an operation input means that outputs a corresponding signal when operated by a person, and a control apparatus that controls a power transmission path securing operation by a power distribution mechanism or a gearshift operation by an auxiliary gearshift mechanism in response to a signal that is input from the operation input means.

Here, it is clear that that with operational input by a driver or the like, for example, it is possible to select between the two-wheel drive mode and the four-wheel drive mode, and it is possible to gearshift the rotational power (for example, changing from the high speed range to the low speed range, or changing from the low speed range to the high speed range).

### Advantageous Effects

According to the present invention, it is possible to provide a comparatively small and light structure for a vehicle transfer that is capable of switching between a two-wheel drive mode and a four-wheel drive mode, and is capable of gearshifting rotational power (for example, changing from a high speed range to a low speed range, or changing from the low speed range to the high speed range).

### Brief Description of the Drawings

[fig.1] Fig. 1 is a skeleton view that shows the overall configuration of one embodiment of a vehicle transfer according to the present invention.
[fig.2]Fig. 2 is an enlarged view of a center differential and differential switching mechanism in Fig. 1, and shows a lock mode state.
[fig.3]Fig. 3 is an enlarged view of a power distribution mechanism in Fig. 1, and shows a clutch engaged state.
[fig.4] Fig. 4 is an enlarged view of a rear wheel side auxiliary transmission and a rear wheel side synchromesh mechanism in Fig. 1, and shows a low speed position state.
[fig.5]Fig. 5 is an enlarged view of a rear wheel side auxiliary transmission and a rear wheel side synchromesh mechanism in Fig. 1, and shows a neutral position state.
[fig.6]Fig. 6 is an enlarged view of a front wheel side auxiliary transmission and a front wheel side synchromesh mechanism in Fig. 1, and shows a low speed position state.
[fig.7]Fig. 7 is an enlarged view of a front wheel side auxiliary transmission and a front wheel side synchromesh mechanism in Fig. 1, and shows a neutral position state.
[fig.8]Fig. 8 is an enlarged view of a clutch in a ring gear operation mechanism in Fig. 1, and shows a clutch engaged state.
[fig.9]Fig. 9 is a chart comparing types of basic drive modes that can be changed by the transfer shown in Fig. 1, and states of constituent elements for establishing each drive mode.
[fig.10]Fig. 10 is a chart comparing types of other drive modes that are possible in parallel with the transfer shown in Fig. 1, and states of constituent elements for establishing each drive mode.
[fig. 11]Fig. 11 is a skeleton view that shows the overall configuration of another embodiment of a vehicle transfer according to the present invention.
[fig.12]Fig. 12 is a flowchart for illustrating a control operation for improving the durability of the ring gear operation mechanism of the vehicle transfer shown in Figs. 1 and 11.

### Explanation of Reference

1 Input shaft
2 Rear wheel side output shaft
3 Front wheel side output shaft
4 Power distribution mechanism
4a Drive sprocket
4b Driven sprocket
4c Wheel-like member
4d Clutch
4e Actuator
5 Center differential (corresponding to rotation differential absorption apparatus)
6 Differential switching mechanism (corresponding to switching mechanism)
7 Auxiliary gearshift mechanism
8 Control apparatus
9 Actuator common to differential switching mechanism and auxiliary gearshift mechanism
11 Input side sleeve
12 Output side sleeve
13 Shaft
20 Rear wheel side auxiliary transmission
Sr Sun gear
Rr Ring gear
Pr Pinion gear
CAr Carrier
30 Front wheel side auxiliary transmission
Sf Sun gear
Rf Ring gear
Pf Pinion gear
CAf Carrier
40 Rear wheel side synchromesh mechanism
41 High speed piece
42 Low speed piece
43 Sleeve
50 Front wheel side synchromesh mechanism
51 High speed piece
52 Low speed piece
53 Sleeve
60 Ring gear operation mechanism (corresponding to state change mechanism)
61 First gear
62 Second gear
63 Third gear
64 Clutch
65 Actuator

### Best Mode for Carrying Out the Invention

Following is a detailed description of an embodiment of the invention, with reference to Figs. 1 to 12.

First, an embodiment of the present invention is shown in Figs. 1 to 10. The overall configuration of an example vehicle transfer of this embodiment will be described with reference to Fig. 1. The transfer shown in Fig. 1 is, for example, a type of transfer that is mounted in a four-wheel drive vehicle based on an FR (front engine/rear drive) vehicle.

The transfer shown in Fig. 1 includes an input shaft 1, a rear wheel side output shaft 2 (corresponding to a first output shaft), a front wheel side output shaft 3 (corresponding to a second output shaft), a power distribution mechanism 4, a center differential 5 (corresponding to a rotation differential absorption apparatus), a differential switching mechanism 6, an auxiliary gearshift mechanism 7, and a control apparatus 8.

These constituent elements are individually described below.

Rotational power that is output from an unshown main transmission such as an automatic transmission linked to the transfer is input to the input shaft 1.

The rear wheel side output shaft 2 is disposed coaxially to the input shaft 1, and outputs drive power to an unshown rear wheel side.

The front wheel side output shaft 3 is disposed parallel to the input shaft 1 and the rear wheel side output shaft 2, and outputs drive power to an unshown front wheel side.

The power distribution mechanism 4 secures either one of a two-wheel drive (2WD) power transmission path and a four-wheel drive (4WD) power transmission path.

The two-wheel drive power transmission path refers to a path that transmits rotational power input to the input shaft 1 to only the rear wheel side output shaft 2, and a state in which that path has been secured is called two-wheel drive mode.

The four-wheel drive power transmission path refers to a path that transmits rotational power input to the input shaft 1 to both the rear wheel side output shaft 2 and the front wheel side output shaft 3, and a state in which that path has been secured is called four-wheel drive mode.

Specifically, the configuration of the power distribution mechanism 4 includes mainly a drive sprocket 4a, a driven sprocket 4b, a wheel-like member 4c that is configured from a chain, belt, or the like, a clutch 4d, and an actuator 4e.

The drive sprocket 4a, the driven sprocket 4b, and the wheel-like member 4c constitute a power transmission means that allows rotational power that is input to the input shaft 1 to be transmitted to the front wheel side output shaft 3.

A center boss portion of the drive sprocket 4a is externally provided via an appropriate roller bearing (not shown) so as to be rotatable relative to an input side sleeve 11 that is externally provided via an appropriate roller bearing (not shown), for example, so as to be rotatable relative to the input shaft 1.

A center boss portion of the driven sprocket 4b is externally provided so as to be rotatable as a single body with an output side sleeve 12 that is attached via an appropriate roller bearing (not shown), for example, so as to be rotatable relative to the front wheel side output shaft 3.

The wheel-like member 4c is placed across the drive sprocket 4a and the driven sprocket 4b.

The clutch 4d switches between an engaged state in which the input shaft 1 and the input side sleeve 11 linked to a sun gear Sd of the center differential 5 can rotate as a single body, and a released state in which they can rotate relative to each other, and is a frictionally engaged clutch that has a plurality of inner diameter side friction plates 4f and outer diameter side friction plates 4g.

The inner diameter side friction plates 4f are installed as a single body to the outer diameter side of an outer end of the input side sleeve 11. The outer diameter side friction plates 4g are installed as a single body to the outer end in the center boss portion of the drive sprocket 4a. The friction plates 4f and 4g are disposed so as to be alternately adjacent in the axial direction.

The actuator 4e switches the clutch 4d to the engaged state or the released state.

The actuator 4e is configured to produce linear drive power in the axial direction of the input shaft 1 in the manner of a fluid pressure-driven direct-acting cylinder or the like, for example. The output shaft (no reference numeral) of the actuator 4e contacts the outer diameter side friction plates 4g via a thrust bearing 4h.

Following is a description of operation of the power distribution mechanism 4.

First, when the clutch 4d is put in the released state (see Fig. 1) by releasing pressing force of the outer diameter side friction plates 4g with the actuator 4e, a state is established in which the input side sleeve 11 and the drive sprocket 4a are separated such that they can rotate relative to each other.

In this state, a power transmission path is secured in which rotational power input to the input shaft 1 is transmitted to only the rear wheel side output shaft 2, so a state is established in which only the rear wheels are driven (two-wheel drive mode, here rear wheel drive mode).

More specifically, when this two-wheel drive mode has been selected, even when rotational power of the input shaft 1 is input from the sun gear Sd of the center differential 5 to the input side sleeve 11, rotational power cannot be transmitted from the input side sleeve 11 to the drive sprocket 4a, so rotational power of the input shaft 1 cannot be transmitted to the front wheel side output shaft 3.

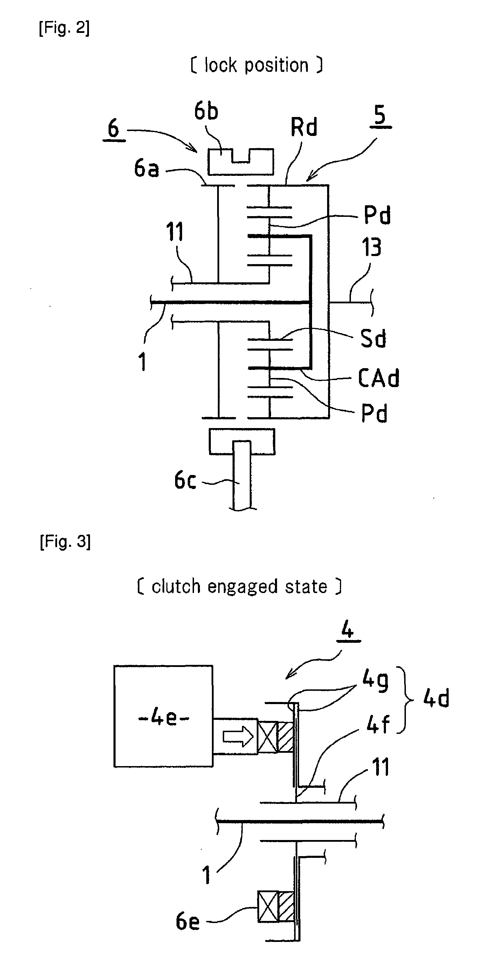

On the other hand, when the clutch 4d is put in the engaged state (see Fig. 2) by pressing the outer diameter side friction plates 4g in one direction in the axial direction with the actuator 4e, a state is established in which the input side sleeve 11 and the drive sprocket 4a are linked such that they can rotate as a single body.

In this state, a power transmission path is secured in which rotational power input to the input shaft 1 is transmitted to both the rear wheel side output shaft 2 and the front wheel side output shaft 3, so a state is established in which both the front wheels and the rear wheels are driven (four-wheel drive mode).

More specifically, when this four-wheel drive mode has been selected, when rotational power of the input shaft 1 is input from the sun gear Sd of the center differential 5 to the input side sleeve 11, the input side sleeve 11 and the drive sprocket 4a rotate as a single body, so rotational power of the input shaft 1 is transmitted to a below front wheel side auxiliary transmission 30 via the wheel-like member 4c, the driven sprocket 4b, and the output side sleeve 12, and is output from the front wheel side auxiliary transmission 30 to the front wheel side output shaft 3.

The center differential 5 is provided on the inner end side of the input shaft 1, and is configured as, for example, a single pinion-type planetary gear mechanism that absorbs a rotation differential between the rear wheel side output shaft 2 and the front wheel side output shaft 3.

Specifically, in the center differential 5, a plurality of pinion gears Pd (also called planetary gears) that are provided between the sun gear Sd and a ring gear Rd, that face each other in the radial direction and are disposed concentrically inside/outside in the radial direction, are arranged at equal intervals in a circle and so as to be capable of turning and revolving, and each of the pinion gears Pd is rotatably supported by a carrier CAd.

The sun gear Sd is joined as a single body to the outer diameter side of an inner end of the input side sleeve 11. The ring gear Rd is disposed so as to be freely rotatable, and at a center position to one side in the axial direction thereof, a shaft 13 is provided that is linked to a sun gear Sr of a below-described rear wheel side auxiliary transmission 20. The carrier CAd rotatably supports the pinion gears Pd, and in the center of the carrier CAd the inner end of the input shaft 1 is joined as a single body.

The differential switching mechanism 6 switches the center differential 5 to a free mode or a lock mode.

The free mode, in essence, is a state in which a differential action for absorbing a rotation differential when such a rotation differential occurs between the output shafts 2 and 3 is made active. With this free mode, it is possible to perform differential distribution of rotational power input to the center differential 5 to both the rear wheel side output shaft 2 and the front wheel side output shaft 3.

The lock mode, in essence, is a state in which the differential action for absorbing a rotation differential when such a rotation differential occurs between the output shafts 2 and 3 is made inactive. With this lock mode, it is possible to directly transmit rotational power input to the center differential 5 to both the rear wheel side output shaft 2 and the front wheel side output shaft 3.

Specifically, the differential switching mechanism 6 is configured to mainly include a lock piece 6a, a sleeve 6b, a shift fork 6c, and a fork shaft 6d.

The lock piece 6a is provided so as to rotate as a single body at the outer diameter side of the input side sleeve 11, and a male spline (not shown) is provided on the outer diameter side of the lock piece 6a.

The sleeve 6b is disposed so as to be slidable in the axial direction on the outer diameter side of the lock piece 6a and the ring gear Rd of the center differential 5, and a female spline (not shown) is provided on the inner diameter side of the sleeve 6b.

The shift fork 6c is installed to the tip end of the fork shaft 6d, and is engaged with a ring-like groove (no reference numeral) provided at the outer circumference of the sleeve 6b.

The fork shaft 6d is linearly pushed/pulled approximately parallel to the input shaft 1 by an actuator 9. When the fork shaft 6d is pushed/pulled, the sleeve 6b is slid approximately parallel to the input shaft 1 via the shift fork 6c.

The actuator 9 is configured to produce linear drive power in the direction approximately parallel to the center axis line of the input shaft 1 in the manner of a fluid pressure-driven direct-acting cylinder or the like, for example, and the fork shaft 6d is linked to that output portion.

Also, the shift fork 6c, the fork shaft 6d, and the actuator 9 constitute a drive mechanism for driving the differential switching mechanism 6.

Following is a description of operation of this differential switching mechanism 6.

In order to establish the free mode, as shown in Fig. 1, the sleeve 6b is slid via the fork shaft 6d and the shift fork 6c by the actuator 9, thus disposing the sleeve 6b at a free position where it only engages with the ring gear Rd of the center differential 5, and as a result a state is established in which the ring gear Rd and the sun gear Sd of the center differential 5 are both freely rotatable.

In order to establish the lock mode, as shown in Fig. 2, the sleeve 6b is slid via the fork shaft 6d and the shift fork 6c by the actuator 9, thus disposing the sleeve 6b at a lock position where it engages with both the ring gear Rd of the center differential 5 and the lock piece 6a, and as a result a state is established in which the ring gear Rd and the sun gear Sd of the center differential 5 can rotate as a single body.

The auxiliary gearshift mechanism 7 selects one of a high speed range (H), a low speed range (L), and a neutral range (N).

The high speed range is a state in which the input shaft 1 is directly linked to the rear wheel side output shaft 2 or the front wheel side output shaft 3, that is, a state that secures a power transmission path that transmits the rotational power input to the input shaft 1 at a ratio of about 1:1 to the rear wheel side output shaft 2 or the front wheel side output shaft 3.

The low speed range is a state that secures a power transmission path that decelerates the rotational power input to the input shaft 1 and then transmits that rotational power to the rear wheel side output shaft 2 or the front wheel side output shaft 3. The deceleration ratio of the low speed range is appropriately determined by the diameter size, gear ratio, and the like of the parts of the below rear wheel side auxiliary transmission 20 and front wheel side auxiliary transmission 30.

The neutral range is a state in which the input shaft 1 is separated from the rear wheel side output shaft 2 or the front wheel side output shaft 3 so that power transmission is not possible.

Specifically, the auxiliary gearshift mechanism 7 is configured to mainly include the rear wheel side auxiliary transmission 20 (corresponding to a first auxiliary transmission), the front wheel side auxiliary transmission 30 (corresponding to a second auxiliary transmission), a rear wheel side synchromesh mechanism 40, a front wheel side synchromesh mechanism 50, and a ring gear operation mechanism 60.

The rear wheel side synchromesh mechanism 40, the front wheel side synchromesh mechanism 50, and the ring gear operation mechanism 60 are included in the setting apparatus described in the claims.

The rear wheel side auxiliary transmission 20 is provided adjacent to the center differential 5 on the inner end side of the rear wheel side output shaft 2, and gearshifts rotational power input from the input shaft 1 and transmits that rotational power to the rear wheel side output shaft 2, and is configured as, for example, a single pinion-type of planetary gear mechanism.

Specifically, in the rear wheel side auxiliary transmission 20, a plurality of pinion gears Pr (also called planetary gears) provided between a sun gear Sr and a ring gear Rr, that face each other and are disposed concentrically inside/outside in the radial direction, are arranged at equal intervals in a circle and so as to be capable of turning and revolving, and each of the pinion gears Pr is rotatably supported by a carrier CAr.

The sun gear Sr is joined as a single body to the outer diameter side of a free end of the shaft 13 provided in the ring gear Rd of the center differential 5. The ring gear Rr is disposed so as to be freely rotatable. The carrier CAr rotatably supports the pinion gears Pr, and in the center of the carrier CAr the inner end of the rear wheel side output shaft 2 is joined as a single body.

In other words, in the rear wheel side auxiliary transmission 20, rotational power of the input shaft 1 is input to the sun gear Sr, and is output to the rear wheel side output shaft 2 from the carrier CAr.

The front wheel side auxiliary transmission 30 is provided at the inner end side of the front wheel side output shaft 3 and facing the rear wheel side auxiliary transmission 20 in the radial direction, and gearshifts the rotational power input from the input shaft 1 via the power transmission means (the drive sprocket 4a, the driven sprocket 4b, and the endless member 4c) and the output side sleeve 12, and transmits that rotational power to the front wheel side output shaft 3. The front wheel side auxiliary transmission 30 is configured as, for example, a single pinion-type planetary gear mechanism.

Specifically, in the front wheel side auxiliary transmission 30, a plurality of pinion gears Pf (also called planetary gears) provided between a sun gear Sf and a ring gear Rf, that face each other and are disposed concentrically inside/outside in the radial direction, are arranged at equal intervals in a circle and so as to be capable of turning and revolving, and each of the pinion gears Pf is rotatably supported by a carrier CAf.

The sun gear Sf is joined as a single body to the outer diameter side of an inner end of the output side sleeve 12. The ring gear Rf is disposed so as to be freely rotatable. The carrier CAf rotatably supports the pinion gears Pf, and in the center of the carrier CAf the inner end of the front wheel side output shaft 3 is joined as a single body.

In other words, in the front wheel side auxiliary transmission 30, rotational power of the input shaft 1 is input to the sun gear Sf via the power transmission means (the drive sprocket 4a, the driven sprocket 4b, and the endless member 4c) and the output side sleeve 12, and is output from the carrier CAf to the front wheel side output shaft 3.

The rear wheel side synchromesh mechanism 40, in essence, is used when switching the rear wheel side auxiliary transmission 20 to any one of the high speed position, the low speed position, and the neutral position.

Specifically, the rear wheel side synchromesh mechanism 40, like an ordinary synchromesh mechanism, mainly includes a high speed piece 41, a low speed piece 42, a sleeve 43, and synchronizer rings 44 and 45.

The high speed piece 41 is joined as a single body to the carrier CAr of the rear wheel side auxiliary transmission 20, and disposed on the inside in the axial direction of the ring gear Rr of the rear wheel side auxiliary transmission 20. The low speed piece 42 is disposed so as to be freely rotatable on the outside in the axial direction of the ring gear Rr of the rear wheel side auxiliary transmission 20. Male splines (not shown) are provided on the outer diameter side of these pieces 41 and 42.

The sleeve 43 is disposed so as to be slidable in the axial direction on the outer diameter side of the high speed piece 41, the ring gear Rr of the rear wheel side auxiliary transmission 20, and the low speed piece 42. A female spline (not shown) is provided on the inner diameter side of the sleeve 43.

The synchronizer ring 44 is disposed between the high speed piece 41 and the ring gear Rr of the rear wheel side auxiliary transmission 20, and rotationally synchronizes the high speed piece 41 and the ring gear Rr when the sleeve 43 is engaged with both the high speed piece 41 and the ring gear Rr.

The synchronizer ring 45 is disposed between the low speed piece 42 and the ring gear Rd of the rear wheel side auxiliary transmission 20, and rotationally synchronizes the low speed piece 42 and the ring gear Rr when the sleeve 43 is engaged with both the low speed piece 42 and the ring gear Rr.

Following is a description of operation of the rear wheel side synchromesh mechanism 40.

First, as shown in Fig. 1, when the sleeve 43 is disposed at the high speed position where the sleeve 43 is engaged with both the ring gear Rr and the high speed piece 41, a state is established in which the ring gear Rr and the sun gear Sr are joined as a single body and can rotate as a single body. This state is the high speed range of the rear wheel side auxiliary transmission 20.

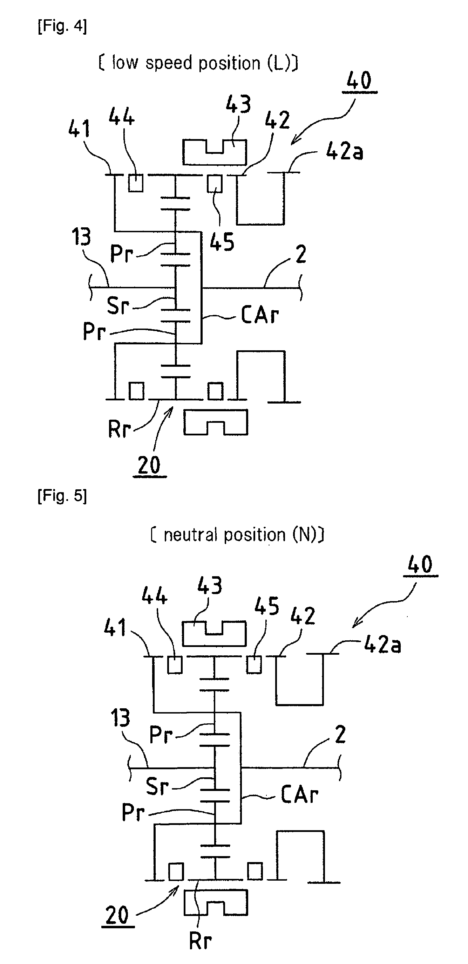

Also, as shown in Fig. 4, when the sleeve 43 is disposed at the low speed position where the sleeve 43 is engaged with both the ring gear Rr and the low speed piece 42, a state is established in which the ring gear Rr and the sun gear Sr can rotate relative to each other. This state is the low speed range of the rear wheel side auxiliary transmission 20. However, in this case, by putting the low speed piece 42 in a state in which it is not able to rotate with the below-described ring gear operation mechanism 60, the ring gear Rr is made non-rotatable.

Furthermore, as shown in Fig. 5, when the sleeve 43 is disposed at the neutral position where the sleeve 43 is engaged with only the ring gear Rr, a state is established in which the ring gear Rr and the sun gear Sr can both freely rotate. This state is the neutral range of the rear wheel side auxiliary transmission 20.

The front wheel side synchromesh mechanism 50, in essence, is used when switching the front wheel side auxiliary transmission 30 to any one of the high speed position, the low speed position, and the neutral position.

Specifically, the front wheel side synchromesh mechanism 50 is configured basically the same as the rear wheel side synchromesh mechanism 40, and mainly includes a high speed piece 51, a low speed piece 52, a sleeve 53, and synchronizer rings 54 and 55.

The high speed piece 51 is joined as a single body to the carrier CAf of the front wheel side auxiliary transmission 30, and disposed on the outside in the axial direction of the ring gear Rf of the front wheel side auxiliary transmission 30. The low speed piece 52 is disposed so as to be freely rotatable on the inside in the axial direction of the ring gear Rf of the front wheel side auxiliary transmission 30. Male splines (not shown) are provided on the outer diameter side of these pieces 51 and 52.

The sleeve 53 is disposed so as to be slidable in the axial direction on the outer diameter side of the high speed piece 51, the ring gear Rf of the front wheel side auxiliary transmission 30, and the low speed piece 52. A female spline (not shown) is provided on the inner diameter side of the sleeve 53.

The synchronizer ring 54 is disposed between the high speed piece 51 and the ring gear Rf of the front wheel side auxiliary transmission 30, and rotationally synchronizes the high speed piece 51 and the ring gear Rf when the sleeve 53 is engaged with both the high speed piece 51 and the ring gear Rf.

The synchronizer ring 55 is disposed between the low speed piece 52 and the ring gear Rf of the front wheel side auxiliary transmission 30, and rotationally synchronizes the low speed piece 52 and the ring gear Rf when the sleeve 53 is engaged with both the low speed piece 52 and the ring gear Rf.

Following is a description of operation of the front wheel side synchromesh mechanism 50.

First, as shown in Fig. 1, when the sleeve 53 is disposed at the high speed position where the sleeve 53 engages with both the ring gear Rf and the high speed piece 51, a state is established in which the ring gear Rf and the sun gear Sf are joined as a single body and can rotate as a single body. This state is the high speed range of the front wheel side auxiliary transmission 30.

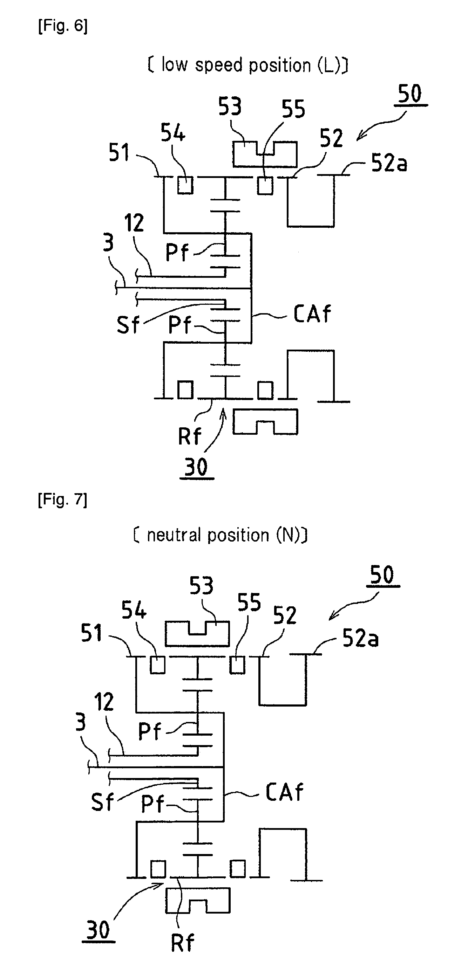

Also, as shown in Fig. 6, when the sleeve 53 is disposed at the low speed position where the sleeve 53 is engaged with both the ring gear Rf and the low speed piece 52, a state is established in which the ring gear Rf and the sun gear Sf can rotate relative to each other. This state is the low speed range of the front wheel side auxiliary transmission 30. However, in this case, by putting the low speed piece 52 in a state in which it is not able to rotate with the below-described ring gear operation mechanism 60, the ring gear Rf is made non-rotatable.

Furthermore, as shown in Fig. 7, when the sleeve 53 is disposed at the neutral position where the sleeve 53 is engaged with only the ring gear Rf, a state is established in which the ring gear Rf and the sun gear Sf can both freely rotate. This state is the neutral range of the front wheel side auxiliary transmission 30.

Incidentally, in order to put the above rear wheel side synchromesh mechanism 40 and front wheel side synchromesh mechanism 50 in the same position, a configuration is adopted such that the position switching operations of the rear wheel side synchromesh mechanism 40 and the front wheel side synchromesh mechanism 50 are performed in cooperation.

Consequently, a shift fork 46 is engaged with an outer circumferential groove provided at the outer circumference of the sleeve 53 of the rear wheel side synchromesh mechanism 40, a shift fork 56 is engaged with an outer circumferential groove provided at the outer circumference of the sleeve 43 of the front wheel side synchromesh mechanism 50, these shift forks 46 and 56 are installed to a single fork shaft 47, and the single fork shaft 47 is driven using the actuator 9, which is the drive source of the above-described differential switching mechanism 6.

The rear wheel side synchromesh mechanism 40, the front wheel side synchromesh mechanism 50, the shift forks 46 and 56, the fork shaft 47, and the actuator 9 correspond to the drive mechanism described in the claims.

The ring gear operation mechanism 60 is for putting the ring gears Rr and Rf provided in the rear wheel side auxiliary transmission 20 and the front wheel side auxiliary transmission 30 in a state in which they can both freely rotate or a state in which they are non-rotatable, and mainly includes three gears 61, 62, and 63, a clutch 64, an actuator 65, and a sleeve 66. This ring gear operation mechanism 60 corresponds to the state change mechanism described in the claims.

The first gear 61 externally contacts and engages with an external gear 42a formed as a single body with the low speed piece 42 of the rear wheel side synchromesh mechanism 40, the second gear 62 externally contacts and engages with an external gear 52a formed as a single body with the low speed piece 52 of the front wheel side synchromesh mechanism 50, and the third gear 63 externally contacts and engages with the first gear 61.

A center shaft 62a that extends one direction in the axial direction is provided in the center of the second gear 62, and a center boss portion 63a is provided in the center of the third gear 63. The center shaft 62a of the second gear 62 is inserted through the inner diameter side of the center boss portion 63a of the third gear 63 such that they can rotate relative to each other. The third gear 63 is disposed so as to be lined up adjacent to the second gear 62 in the axial direction.

The clutch 64 is a frictionally engaged clutch that has a plurality of inner diameter side friction plates 67 and outer diameter side friction plates 68. The inner diameter side friction plates 67 are joined as a single body with the second gear 62 so as to be lined up in the axial direction, on the free end side of the center shaft 62a of the second gear 62. The outer diameter side friction plates 68 are joined as a single body to one end side of the center boss portion 63a of the third gear 63. The friction plates 67,68 are disposed so as to be alternately adjacent in the axial direction.

The actuator 65 is configured to produce linear drive power in the center axis line direction of the center shaft 62a of the second gear 62 and the third gear 63, in the manner of a fluid pressure-driven direct-acting cylinder or the like, for example, and engages or releases the clutch 64 as necessary.

The sleeve 66, is fixed to a transfer case (no reference numeral), for example, and guides linear operation while preventing rotation of an output shaft (no reference numeral) of the actuator 65. That is, the sleeve 66 is used for, when the clutch 64 is put in an engaged state by putting the inner diameter side friction plates 67 and the outer diameter side friction plates 68 in contact, maintaining non-rotation of both friction plates 67 and 68 and thus preventing input of rotational power to the output shaft of the actuator 65.

Following is a description of operation of the ring gear operation mechanism 60.

First, when the clutch 64 is released (see Fig. 1) by releasing pressing force to the outer diameter side friction plates 67 with the actuator 65, a free state is established in which the second gear 62 and the third gear 63 are separated such that they can rotate relative to each other. As a result, a state is established in which the first gear 61 and the second gear 62 can independently rotate without interfering with each other.

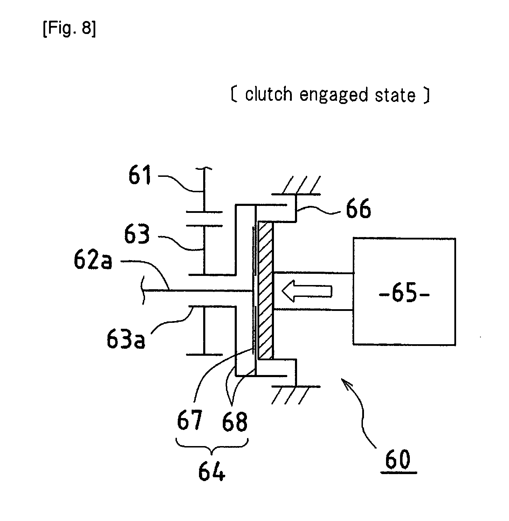

On the other hand, when the clutch 64 is engaged (see Fig. 8) by pressing the outer diameter side friction plates 67 one direction in the axial direction with the actuator 65, a lock state is established in which the second gear 62 and the third gear 63 are joined as a single body. As a result, because the rotational power that is input to the third gear 63 engaged with the first gear 61 and the direction of rotation that is input to the second gear 62 are in opposite directions, the rotational forces are in equilibrium, or are canceled, and thus rotation is not possible.

Therefore, in a condition in which, for example, the ring gear Rr of the rear wheel side auxiliary transmission 20 and the low speed piece 42 of the rear wheel side synchromesh mechanism 40 are linked to the sleeve 43 as a single body, and the ring gear Rf of the front wheel side auxiliary transmission 30 and the low speed piece 52 of the front wheel side synchromesh mechanism 50 are linked to the sleeve 53 as a single body, in the clutch released state, the ring gear Rr of the rear wheel side auxiliary transmission 20 and the ring gear Rf of the front wheel side auxiliary transmission 30 are both freely rotatable, and in the clutch engaged state, both the ring gear Rr of the rear wheel side auxiliary transmission 20 and the ring gear Rf of the front wheel side auxiliary transmission 30 are non-rotatable.

It is preferable to design the diameter size, number of gears, and the like of the first to third gears 61 to 63 in consideration of such a rotational power canceling action.

The control apparatus 8 appropriately controls operation of the power distribution mechanism 4, the differential switching mechanism 6, and the auxiliary gearshift mechanism 7 as required by the driver, and is configured as an ECU (Electronic Control Unit) that, like commonly known ECUs, includes a central processing unit (CPU), a program memory (ROM), a data memory (RAM), and a backup memory (nonvolatile RAM) that are connected to each other by a bi-directional bus.

An input shaft revolutions sensor 15, a rear wheel side output shaft revolutions sensor 16, a front wheel side output shaft revolutions sensor 17, and the like are connected to the control apparatus 8 via an input interface (not shown), and each of the above actuators 4e, 9, and 65, for example, is connected via an output interface (not shown).

Each of the sensors 15 to 17, for example, is configured as a non-contact sensor that is magnetically sensitive, light-sensitive, or the like, and disposed facing, in non-contact, pulser rings 15a to 17a that are externally provided at appropriate positions of the input shaft 1, the rear wheel side output shaft 2, and the front wheel side output shaft 3, for example.

Also, for example, a mode selection apparatus 81, a center differential selection apparatus 82, and a range selection apparatus 83 are connected to the control apparatus 8 via an input interface (not shown).

The mode selection apparatus 81 is a four-action-type apparatus that selects any one among the two-wheel drive mode, the high speed range/four-wheel drive mode (H4), the low speed range/four-wheel drive mode (L4), and the neutral mode.

The neutral mode, for example, is used when towed by another vehicle, and when, for example, the first output shaft 2 and the second output shaft 3 are rotationally driven by rotation of unshown front wheels and rear wheels due to towing by another vehicle, establishes a state in which the first and second output shafts 2 and 3 are made to idle, so that rotational power is not transmitted to the input shaft 1 or other members.

The center differential selection apparatus 82 is a two-action-type apparatus that selects either of the lock mode and the free mode.

The range selection apparatus 83 is a two-action type apparatus that selects either of the high speed range and the low speed range.

Each of these selection apparatuses 81 to 83, although not shown in detail, for example, is disposed near a driver's seat, and is configured to include an operation member (such as a select lever or a select button) that is manually operated by the driver, and a switch that outputs signals corresponding to the subject selected with operation of this operation member. The selection apparatuses 81 to 83 correspond to the operation input means described in the claims.

This switch, for example, outputs a signal corresponding to a successively changing state for each operation of the operation member, and is configured as a rotary switch or a toggle switch, for example. However, the same number of switches may be provided as the number of subjects selected with operation of the operation member.

Note that in this embodiment, only the subjects connected to the input interface or the output interface of the control apparatus 8 that are related to the above features of the present invention are described, and a description of those that are not directly related to the features of the invention are omitted.

Next is a detailed description of, with respect to a transfer with the above configuration, the procedure when changing the drive mode or the speed range, and control processing by the control apparatus 8.

(1) When the two-wheel drive mode is selected by the driver manually operating the mode selection apparatus 81, the control apparatus 8, based on output from the mode selection apparatus 81, identifies the selected mode, and by appropriately controlling the actuator 4e of the mode switching mode, the actuator 9 of the differential switching mechanism 6, the rear wheel side synchromesh mechanism 40, and the front wheel side synchromesh mechanism 50, and the actuator 65 of the ring gear operation mechanism 60, establishes the two-wheel drive mode (rear wheel drive mode), which is the standard mode.

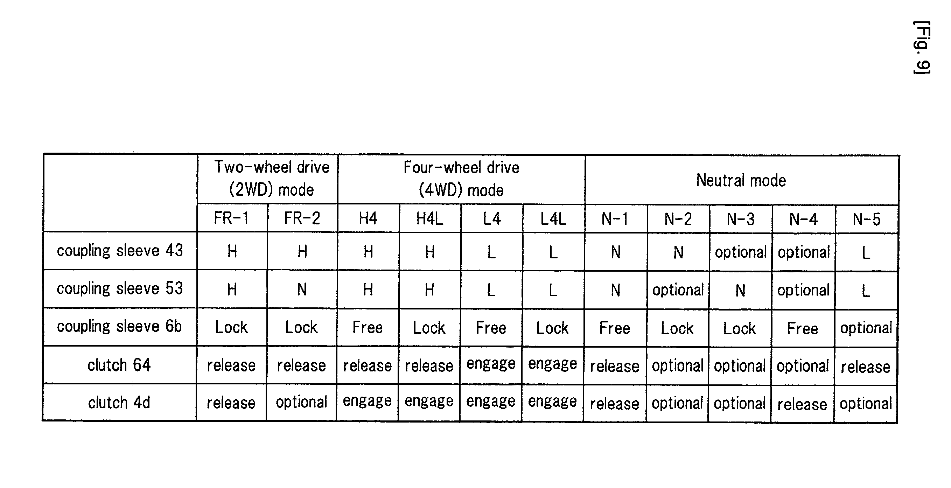

In this embodiment, with respect to the two-wheel drive mode (rear wheel drive mode), which is the standard mode, two types are set, "FR-1" and "FR-2", as shown in Fig. 9.

The reason for providing two types in this way is so that when the driver has operated the mode selection apparatus 81 to select the two-wheel drive mode, the control apparatus 8 can select an appropriate type for most quickly shifting states according to the drive mode that has been set prior to this selection operation.

First, when the control apparatus 8 has judged that "FR-1" is optimal, as shown for example in Fig. 9, the sleeve 43 of the rear wheel side synchromesh mechanism 40 and the sleeve 53 of the front wheel side synchromesh mechanism 50 are both set to the high speed position (H, see Fig. 1), the sleeve 6b of the differential switching mechanism 6 is set to the lock position (see Fig. 2), and the clutch 4d of the power distribution mechanism 4 and the clutch 64 of the ring gear operation mechanism 60 are both released (see Fig. 1).

Thus, the rear wheel side auxiliary transmission 20 and the front wheel side auxiliary transmission 30 are both set to the high speed range, the center differential 5 is set to the lock mode, and the input shaft 1 and the rear wheel side output shaft 2 are directly linked. Therefore, when rotational power is input from the input shaft 1 to the carrier CAd of the center differential 5, the carrier CAd, the pinion gears Pd, and the ring gear Rd all rotate as a single body, the rotational power is transmitted to the sun gear Sr of the rear wheel side auxiliary transmission 20 via the shaft 13, and further, the sun gear Sr, the pinion gears Pr, the ring gear Rr, and the carrier CAr all rotate as a single body and rotational power is transmitted to the rear wheel side output shaft 2.

When the control apparatus 8 has judged that "FR-2" is optimal, the sleeve 43 of the rear wheel side synchromesh mechanism 40 is set to the high speed position (H, see Fig. 1), the sleeve 53 of the front wheel side synchromesh mechanism 50 is set to the neutral position (N, see Fig. 7), the sleeve 6b of the differential switching mechanism 6 is set to the lock position (see Fig. 2), the clutch 4d of the power distribution mechanism 4 is set as desired (maintaining the prior state), and the clutch 64 of the ring gear operation mechanism 60 is released (see Fig. 1).

In this case, the power transmission path is basically the same as FR-1. However, in the case of FR-2, the front wheel side auxiliary transmission 30 is set to the neutral range, so the front wheel side output shaft 3 can be separated from the output side sleeve 12 and the power transmission means (4a, 4b, and 4c). In this case, particularly, although the front wheel side output shaft 3 is rotationally driven in cooperation with rotation of the front wheels that accompanies vehicle travel, the output shaft 3 only idles, so rotational power is not transmitted to the output side sleeve 12 and the power transmission means (4a, 4b, and 4c), and thus, during running in the rear wheel drive state, drag resistance from the front wheels is reduced, for example, so it is possible to achieve improvements in running performance and fuel cost.

(2) When the high speed range/four-wheel drive mode (H4) is selected by the driver manually operating the mode selection apparatus 81, the control apparatus 8, based on output from the mode selection apparatus 81, identifies the selected mode, and by controlling the actuator 4e of the power distribution mechanism 4, the actuator 9 of the differential switching mechanism 6, the rear wheel side synchromesh mechanism 40, and the front wheel side synchromesh mechanism 50, and the actuator 65 of the ring gear operation mechanism 60, establishes the high speed range/four-wheel drive mode (H4).

In this case, the control apparatus 8, as shown for example in Fig. 9, sets both the sleeve 43 of the rear wheel side synchromesh mechanism 40 and the sleeve 53 of the front wheel side synchromesh mechanism 50 to the high speed position (H, see Fig. 1), sets the sleeve 6b of the differential switching mechanism 6 to the free position (see Fig. 1), and further, engages the clutch 4d of the power distribution mechanism 4 (see Fig. 3) and releases the clutch 64 of the ring gear operation mechanism 60 (see Fig. 1).

Thus, the rear wheel side auxiliary transmission 20 and the front wheel side auxiliary transmission 30 are both set to the high speed range, the center differential 5 is set to the free mode. Therefore, when rotational power is input from the input shaft 1 to the carrier CAd of the center differential 5, the rotational power is transmitted in order to the pinion gears Pd, the ring gear Rd, the shaft 13, and the sun gear Sr of the rear wheel side auxiliary transmission 20, and further, the sun gear Sr, the pinion gears Pr, the ring gear Rr, and the carrier CAr all rotate as a single body and rotational power is transmitted to the rear wheel side output shaft 2. On the other hand, the sun gear Sd of the center differential 5, the input side sleeve 11, and the drive sprocket 4a rotate as a single body, so rotational power that has been transmitted from the input shaft 1 to the sun gear Sd of the center differential 5 is transmitted to the sun gear Sf of the front wheel side auxiliary transmission 30 in order via the drive sprocket 4a, the wheel-like member 4c, the driven sprocket 4b, and the output side sleeve 12, and further, the sun gear Sf, the pinion gears Pf, the ring gear Rf, and the carrier CAf all rotate as a single body and rotational power is transmitted to the front wheel side output shaft 3. At this time, even if a rotational differential of the rear wheel side output shaft 2 and the front wheel side output shaft 3 occurs, with turning of the pinion gears Pd, the center differential 5, which is in the free mode, can absorb this differential by turning of the pinion gears Pd, so circulation torque does not occur in the drive mechanism.

(3) When the low speed range/four-wheel drive mode (L4) is selected by the driver manually operating the mode selection apparatus 81, the control apparatus 8, based on output from the mode selection apparatus 81, identifies the selected mode, and by controlling the actuator 4e of the power distribution mechanism 4, the actuator 9 of the differential switching mechanism 6, the rear wheel side synchromesh mechanism 40, and the front wheel side synchromesh mechanism 50, and the actuator 65 of the ring gear operation mechanism 60, establishes the low speed range/four-wheel drive mode (L4)

The control apparatus 8, as shown for example in Fig. 9, sets both the sleeve 43 of the rear wheel side synchromesh mechanism 40 and the sleeve 53 of the front wheel side synchromesh mechanism 50 to the low speed position (L, see Figs. 4 and 6), sets the sleeve 6b of the differential switching mechanism 6 to the free position (see Fig. 1), and further, engages both the clutch 4d of the power distribution mechanism 4 and the clutch 64 of the ring gear operation mechanism 60 (see Figs. 3 and 8).

Thus, the rear wheel side auxiliary transmission 20 and the front wheel side auxiliary transmission 30 are set to the low speed range, and the center differential 5 is set to the free mode. Therefore, when rotational power is input from the input shaft 1 to the carrier CAd of the center differential 5, the rotational power is transmitted in order to the pinion gears Pd, the ring gear Rd, the shaft 13, and the sun gear Sr of the rear wheel side auxiliary transmission 20, and further, rotational power of the sun gear Sr is decelerated by the pinion gears Pr and the carrier CAr and transmitted to the rear wheel side output shaft 2. On the other hand, the sun gear Sd of the center differential 5, the input side sleeve 11, and the drive sprocket 4a rotate in synchronization, so rotational power of the sun gear Sd of the center differential 5 is transmitted to the sun gear Sf of the front wheel side auxiliary transmission 30 in order via the drive sprocket 4a, the wheel-like member 4c, the driven sprocket 4b, and the output side sleeve 12, and further, rotational power of the sun gear Sf is decelerated by the pinion gears Pf and the carrier CAf and rotational power is transmitted to the front wheel side output shaft 3. At this time, the center differential 5, which is in the free mode, can absorb a rotational differential of the rear wheel side output shaft 2 and the front wheel side output shaft 3 with turning of the pinion gears Pd, so circulation torque does not occur in the drive mechanism.

In this way, the high speed range/four-wheel drive mode (H4) and the low speed range/four-wheel drive mode (L4) are selectable. H4 and L4 correspond to a so-called full time four-wheel drive mode.

However, in a condition in which H4 or L4 is selected, if the lock mode is selected by the driver manually operating the center differential selection apparatus 82, it is possible to set the center differential 5 to the lock mode. That state is indicated by "H4L" and "L4L" in the table in Fig. 9.

In the cases of H4L and L4L, the carrier CAd, the pinion gears Pd, and the ring gear Rd all rotate as a single body in the center differential 5, so differential action is inactive, but otherwise, the power transmission path in the cases of H4L and L4L are basically the same as in the above H4 and L4 modes.

Note that when switching from the H4L mode to the H4 mode during vehicle travel, the center differential 5 is merely switched from the lock mode to the free mode by the differential switching mechanism 6, but at that time, assuming a condition in which a rotation differential between the rear wheel side output shaft 2 and the front wheel side output shaft 3 is occurring, circulation torque acts on each constituent element linked to the rear wheel side output shaft 2 and the front wheel side output shaft 3, so it may not be possible to move the sleeve 6b of the differential switching mechanism 6.

In this sort of condition, if the clutch 4d of the power distribution mechanism 4 is temporarily released, it is possible to eliminate the circulation torque with the clutch 4d, and as a result, it becomes possible to move the sleeve 6b of the differential switching mechanism 6.

Accordingly, as the processing of the control apparatus 8 in the case of switching from the H4L mode to the H4 mode during vehicle travel, it is preferable that first, the clutch 4d of the power distribution mechanism 4 is temporarily released, and then the sleeve 6b of the differential switching mechanism 6 is slid to the free position side. Thus, it is possible to accurately and smoothly perform the above sort of mode switching operation.

(4) When the neutral mode is selected by the driver manually operating the mode selection apparatus 81, the control apparatus 8, based on output from the mode selection apparatus 81, identifies the selected mode, and by appropriately controlling the actuator 4e of the power distribution mechanism 4, the actuator 9 of the differential switching mechanism 6, the rear wheel side synchromesh mechanism 40, and the front wheel side synchromesh mechanism 50, and the actuator 65 of the ring gear operation mechanism 60, establishes the neutral mode.

In this embodiment, with respect to the neutral mode, five types N-1 to N-5 are set as shown in Fig. 9.

The reason for providing five types in this way is so that when the driver has manually operated the mode selection apparatus 81 to select the neutral mode, the control apparatus 8 can select an appropriate type for most quickly shifting states according to the drive mode that has been established prior to this selection operation.

First, when the control apparatus 8 has judged that "N-1" is optimal, as shown for example in the table in Fig. 9, the sleeve 43 of the rear wheel side synchromesh mechanism 40 and the sleeve 53 of the front wheel side synchromesh mechanism 50 are both set to the neutral position (N, see Figs. 5 and 7), the sleeve 6b of the differential switching mechanism 6 is set to the free position (see Fig. 1), and further, the clutch 4d of the power distribution mechanism 4 and the clutch 64 of the ring gear operation mechanism 60 are both released (see Fig. 1).

Afterward, with respect to the neutral modes N-2 to N-5, as shown for example in the table in Fig. 9, optional in the table means that the state selected prior to shifting to the neutral modes N-2 to N-5 is maintained.

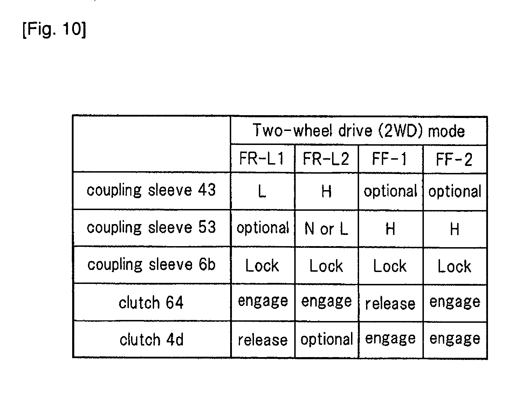

Incidentally, with the transfer having the configuration adopted in this embodiment, other than the drive modes shown in the table in Fig. 9, special drive modes, for example, as shown in the table in Fig. 10, can be selected, and these are described below.

First, for example, in a condition in which the rear wheel drive mode (FR-1 or FR-2 in Fig. 9), which is the standard form of the two-wheel drive mode, has been selected, if the low speed range is selected by the driver manually operating the range selection apparatus 83, it is possible to set the low speed range (FR-L1 or FR-L2 in Fig. 10) of the rear wheel drive mode.

The reason for providing the two types FR-L1 and FR-L2 of low speed range of the rear wheel drive mode in this way is so that when the driver has operated the range selection apparatus 83 to select the low speed range, the control apparatus 8 can select an appropriate type for most quickly shifting states according to the drive mode that has been set prior to this selection operation.

For reference, a case was investigated in which in a condition in which FR-1 in Fig. 9 was selected, the low speed range was selected by the driver manually operating the range selection apparatus 83.

First, in order to establish "FR-L1", as shown in the table in Fig. 10, it is possible to set the sleeve 43 of the rear wheel side synchromesh mechanism 40 to the low speed position (L, see Fig. 4), and engage the clutch 64 of the ring gear operation mechanism 60 (see Fig. 8).

On the other hand, in order to establish "FR-L2", as shown in the table in Fig. 10, it is possible to set the sleeve 53 of the front wheel side synchromesh mechanism 50 to the low speed position (L, see Fig. 6) or the neutral position (N, see Fig. 7), and engage the clutch 64 of the ring gear operation mechanism 60 (see Fig. 8).

Therefore, it is thought that the number of necessary state switches is two in both cases, so either may be selected. In such a case, selection by the control apparatus 8 is ambiguous, and this can be addressed by setting a priority order is advance.

Also, for reference, a case was investigated in which in a condition in which FR-2 in Fig. 9 was selected, for example, the low speed range was selected by the driver manually operating the range selection apparatus 83.

First, in order to establish "FR-L1", as shown in the table in Fig. 10, it is possible to set the sleeve 43 of the rear wheel side synchromesh mechanism 40 to the low speed position (L, see Fig. 4), and engage the clutch 64 of the ring gear operation mechanism 60 (see Fig. 8).

On the other hand, in order to establish "FR-L2", as shown in the table in Fig. 10, it is possible to engage the clutch 64 of the ring gear operation mechanism 60 (see Fig. 8).

Therefore, the control apparatus 8 can judge that it is optimal to select "FR-L2", for which one state switch is necessary.

Also, as shown in the table in Fig. 10, with respect to the two-wheel drive mode, other than the rear wheel drive mode described above, it is possible to select a front wheel drive mode. Two types, high speed range (FF-1) and low speed range (FF-2), also can be set in this front wheel drive mode.

In this case, for example, it is possible to increase the number of positions selected by the mode selection apparatus 81 by two, so that it is possible to select FF-1 and FF-2.

First, in order to establish "FF-1", as shown in the table in Fig. 10, it is possible to set the sleeve 53 of the front wheel side synchromesh mechanism 50 to the high speed position (H, see Fig. 1), maintain the prior state of the sleeve 43 of the rear wheel side synchromesh mechanism 40, engage the clutch 4d of the power distribution mechanism 4 (see Fig. 3), and release the clutch 64 of the ring gear operation mechanism 60 (see Fig. 1).

On the other hand, in order to establish "FF-2", as shown in the table in Fig. 10, it is possible to set the sleeve 53 of the front wheel side synchromesh mechanism 50 to the high speed position (H, see Fig. 1), maintain the prior state of the sleeve 43 of the rear wheel side synchromesh mechanism 40, and engage both the clutch 4d of the power distribution mechanism 4 and the clutch 64 of the ring gear operation mechanism 60 (see Figs. 3 and 8).

As described above, in an embodiment in which the present invention is applied, by devising the above sort of auxiliary gearshift mechanism 7 for changing the speed range in which the two auxiliary transmissions 20 and 30 are disposed divided among the two output shafts 2 and 3, it is possible for the clutch 64 of the ring gear operation mechanism 60 of the auxiliary gearshift mechanism 7 to have a comparatively small transmitted torque capacity.

Thus, because it is possible to reduce the size and weight of the transfer, it is possible to increase the ability to mount the transfer to a vehicle in comparison to a conventional transfer, and reduced size and weight is also advantageous for increasing design freedom of the interior space of the vehicle.

Moreover, because the clutch 64 is disposed on the downstream side in the power transmission direction, during vehicle travel, i.e., in a state in which rotational power is being input from the transmission (main transmission), as required by the driver, it is possible to select various drive modes, and it is possible to change the speed range in each drive mode.

Accordingly, this configuration is capable of contributing to drivability, for example by making it possible for drivers to enjoy driving as they wish by switching to a desired speed range in response to changes in the state of the road face or the like during vehicle travel, without stopping the vehicle or performing a wasteful operation more than is necessary, as with conventional transfers.

Also note that the present invention is of course not limited to the above embodiment, and may be variously modified without departing from the gist of the present invention.

(1) In the above embodiment, an example was given of a transfer that is used in a four-wheel drive vehicle based on an FR (front engine/rear drive) vehicle, but the present invention is also applicable to a transfer that is used in a four-wheel drive vehicle based on an FF (front engine/front drive) vehicle, or other types of transfers. Also, the present invention is not limited to only this sort of vehicle transfer, and is also applicable to, for example, various power transmission apparatuses.

(2) In the transfer of the above embodiment, an example was given of the center differential 5 constituted from a planetary gear mechanism as a rotation differential absorption apparatus, but it is also possible to use, for example, an ordinary differential structure in which a plurality of bevel gears are combined, or to substitute a clutch with no differential gears or a coupling or the like.

(3) The transfer of the above embodiment is provided with the center differential 5 as a rotation differential absorption apparatus, but it is also possible to omit the center differential 5.

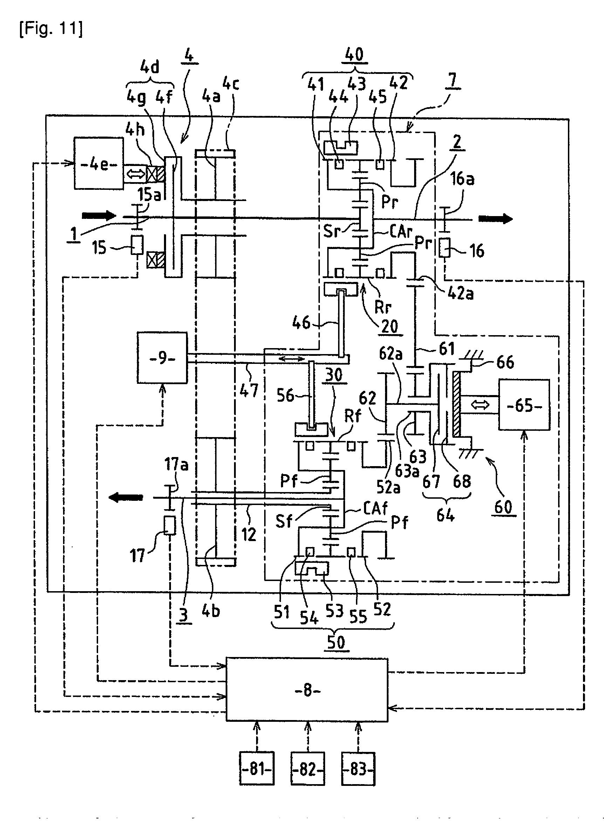

Here, a configuration in which the center differential 5 is omitted will be described.As shown for example in Fig. 11, the input side sleeve 11 and the differential switching mechanism 6 are omitted, the input shaft 1 is joined as a single body to the sun gear Sr of the rear wheel side auxiliary transmission 20, and the inner diameter side friction plates 4f of the clutch 4d provided in the power distribution mechanism 4 are joined as a single body to the input shaft 1.

In the case of such a configuration, when the clutch 4d of the power distribution mechanism 4 is released, the drive sprocket 4a rotates relative to the input shaft 1, so the two-wheel drive mode is established. On the other hand, when the clutch 4d is engaged, the drive sprocket 4a is joined so as to be capable of rotating as a single body with the input shaft 1, so the four-wheel drive mode is established.

However, with this sort of configuration, in the four-wheel drive mode, when a rotation differential between the rear wheel side output shaft 2 and the front wheel side output shaft 3 occurs, it is not possible to absorb this rotation differential.

Consequently, it is possible to adopt a configuration in which when a rotation differential between the rear wheel side output shaft 2 and the front wheel side output shaft 3 occurs, this occurrence of rotation differential can be detected with the control apparatus 8, and when rotation differential has been detected, for example, the control apparatus 8 performs slip control of the clutch 4d of the power distribution mechanism 4, thus absorbing the rotation differential. That slip control means performing control to adjust the degree of connection of the clutch 4d.

In the case of this sort of embodiment, the power distribution mechanism 4 and the control apparatus 8 function as a rotation differential absorption apparatus, so in comparison to the embodiment shown in Fig. 1, simplification of the configuration and weight reduction are possible.

(4) In the above embodiment, the single actuator 9 is used as a drive source for driving the sleeve 6b of the differential switching mechanism 6, the sleeve 43 of the rear wheel side synchromesh mechanism 40, and the sleeve 53 of the front wheel side synchromesh mechanism 50, but a configuration is also possible in which individual dedicated actuators individually drive those sleeves.

However, it is more advantageous to use the single actuator 9 as in the above embodiment, from the reducing of equipment costs and occupied space.

(5) In the above embodiment, an example is given in which the actuators 4e, 9, and 65 are direct-acting cylinders or the like, but it is also possible, for example, for those actuators to generate rotational power, in the manner of an electric motor or the like. However, in that case, it is necessary to provide a mechanism that converts the rotational movement to linear movement.

(6) In the transfer described in the above embodiment, it is an object to improve the durability of the first to third gears 61 to 63 of the ring gear operation mechanism 60, and it is possible to perform processing as follows with the control apparatus 8.

That is, such as in a case in which the low speed range is set as an appropriate drive mode, when a state in which the ring gear Rr of the rear wheel side auxiliary transmission 20 and the ring gear Rf of the front wheel side auxiliary transmission 30 are stopped in non-rotation is kept for a long time, with the clutch 64 of the ring gear operation mechanism 60, it is possible to address this state by shifting, in the circumferential direction, the engagement position of the first gear 61 and the third gear 63, the engagement position of the first gear 61 and the outer gear 42a of the low speed piece 42 of the rear wheel side synchromesh mechanism 40, and the engagement position of the second gear 62 and the outer gear 52a of the low speed piece 52 of the front wheel side synchromesh mechanism 50.

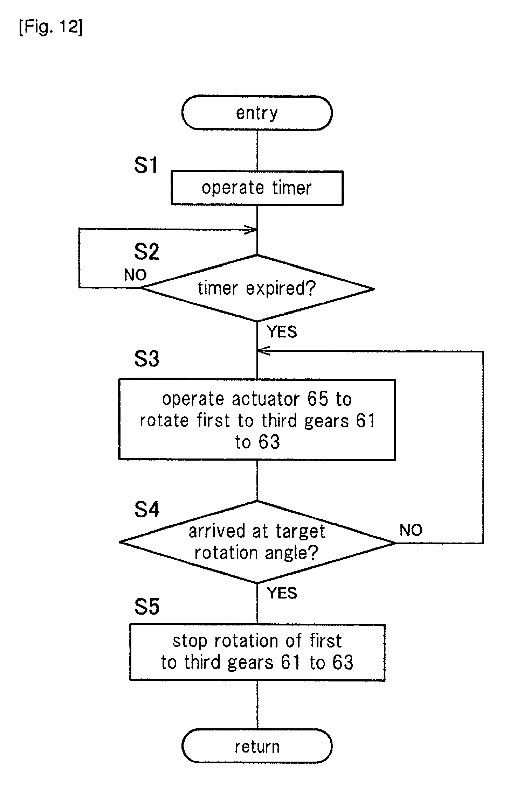

Specifically, the above processing by the control apparatus 8 will be described with reference to the flowchart in Fig. 12. This flowchart is entered when it is identified that the low speed range has been selected.

First, in Step S1, execution time of the low speed range is measured by operating a timer within the control apparatus 8.

Then, in Step S2, it is determined whether or not the timer has expired. That is, it is determined whether or not a measurement value by the timer has reached a threshold value defined in advance. This threshold value is known from testing or the like of a limit time of breakdown due to fatigue when a load has been applied to the gear engagement portion, and is appropriately set in consideration of the results of this testing.

If the timer has not expired, a negative determination is made in Step S2, and Step S2 is repeated until the timer expires. When the timer expires, an affirmative determination is made in Step S2, and then the processing shifts to Step S3.

In Step S3, the actuator 65 of the ring gear operation mechanism 60 is controlled to release the clutch 64 for a predetermined time or adjust the clutch 64 in the direction that relaxes the degree of engagement (a half-clutch state).

Thus, the first to third gears 61 to 63 become rotatable. Accordingly, the rotational power input to the ring gears Rr and Rf of the rear wheel side auxiliary transmission 20 and the front wheel side auxiliary transmission 30 is transmitted to the first to third gears 61 to 63 via the sleeves 43 and 53, so the first to third gears 61 to 63 rotate, and the engagement position of the first gear 61 and the third gear 63, the engagement position of the first gear 61 and the outer gear 42a of the low speed piece 42 of the rear wheel side synchromesh mechanism 40, and the engagement position of the second gear 62 and the outer gear 52a of the low speed piece 52 of the front wheel side synchromesh mechanism 50 are shifted in the circumferential direction.

Then, in the following Step S4, a determination is made of whether or not the first to third gears 61 to 63 that rotate have reached a desired target rotation angle. Here, for example, an encoder (not shown) for detecting the number of revolutions of the third gear 63 is provided, and a determination is made of whether or not the output (rotation angle) of this encoder is at least the threshold value (target rotation angle) defined in advance. This threshold value is known by performing testing or the like of the rotation angle needed for the engagement portion where gears engage with each other to be in a non-engaged state, and is appropriately set in consideration of the results of this testing.

Here, if the rotation angle of the first to third gears 61 to 63 has not reached the predetermined rotation angle, Steps S3 and S4 are repeated until the predetermined rotation angle is reached, and when the predetermined rotation angle is reached, an affirmative determination is made in Step S4, and the processing shifts to Step S5.

In Step S5, the actuator 65 of the ring gear operation mechanism 60 is controlled to engage the clutch 64, and thus stop rotation of the first to third gears 61 to 63, and then this flowchart is exited.

As described above, such as in a case in which the low speed range is set as an appropriate drive mode, when a state in which the ring gear Rr of the rear wheel side auxiliary transmission 20 and the ring gear Rf of the front wheel side auxiliary transmission 30 are stopped in non-rotation is kept for a long time, in a case where this state is addressed by shifting the engagement position of the first gear 61 and the third gear 63, the engagement position of the first gear 61 and the outer gear 42a of the low speed piece 42 of the rear wheel side synchromesh mechanism 40, and the engagement position of the second gear 62 and the outer gear 52a of the low speed piece 52 of the front wheel side synchromesh mechanism 50 by an appropriate angle in the circumferential direction, it is possible to improve the durability of the first to third gears 61 to 63 of the ring gear operation mechanism 60 and the low speed pieces 42 and 52.

The present invention may be embodied in various other forms without departing from the spirit or essential characteristics thereof. The embodiments disclosed in this application are to be considered in all respects as illustrative and not limiting. The scope of the invention is indicated by the appended claims rather than by the foregoing description, and all modifications or changes that come within the meaning and range of equivalency of the claims are intended to be embraced therein.

### Industrial Applicability

The vehicle transfer of the present invention is capable of selecting a two-wheel drive mode and a four-wheel drive mode, and capable of a rotational power gearshift, and moreover, is beneficial from the standpoint of being able to provide a comparatively small and light structure. Also, when mounted in a vehicle, the transfer of the present invention is useful from the standpoint of being able to improve drivability and running on various road surfaces.

## Claims

1. A vehicle transfer, comprising:
a power distribution mechanism (4) for securing a two-wheel drive power transmission path that allows rotational power that is input to an input shaft (1) to be output from only a first output shaft (2) that is disposed coaxially to the input shaft (1), or a four-wheel drive power transmission path that allows the rotational power that is input to the input shaft (1) to be output from both the first output shaft (2) and a second output shaft (3) that is disposed parallel to the first output shaft (2); and
an auxiliary gearshift mechanism (7) for gearshifting rotational power transmitted from the input shaft (1) to the first output shaft (2) or the first output shaft (2) and the second output shaft (3); wherein
the auxiliary gearshift mechanism (7) includes a first auxiliary transmission (20) that is disposed in the first output shaft (2), a second auxiliary transmission (30) that is disposed in the second output shaft (3), and a setting apparatus (40, 50) that causes the first auxiliary transmission (20) and the second auxiliary transmission (30) to perform gearshift operations as required
**characterized in that**
the first auxiliary transmission (20) is a planetary gear mechanism that includes a sun gear (Sr) that is joined as a single body with the input shaft (1), a ring gear (Rr) that is disposed so as to be freely rotatable on the outer diameter side of the sun gear (Sr), a plurality of pinion gears (Pr) that are disposed so as to be capable of turning and revolving between the sun gear (Sr) and the ring gear (Rr), and a carrier (CAr) that supports each of the pinion gears (Pr) and is joined as a single body with the first output shaft (2);
wherein the second auxiliary transmission (30) is a planetary gear mechanism that includes a sun gear (Sf) that is externally fitted to the second output shaft (3) so as to be capable of rotating relative to the second output shaft (3) and is joined as a single body with an output side sleeve (12) that is linked so as to move in cooperation with the input shaft (1) via a power transmission means (4a, 4b, 4c), a ring gear (Rf) that is disposed so as to be freely rotatable on the outer diameter side of the sun gear (Sf), a plurality of pinion gears (Pf) that are disposed so as to be capable of turning and revolving between the sun gear (Sf) and the ring gear (Rf), and a carrier (CAf) that supports each of the pinion gears (Pf) and is joined as a single body with the second output shaft (3);
wherein the setting apparatus (40, 50) has a configuration for, as required, switching to a state in which the ring gear (Rr, Rf) of the respective first and second auxiliary transmissions (30) is made freely rotatable, and then any two of the ring gear (Rr, Rf), the sun gear (Sr, Sf), and the carrier (CAr, CAf) are linked as a single body, or to a state in which the ring gear (Rr, Rf) of the respective first and second auxiliary transmissions (30) is made non-rotatable, and then the ring gear (Rr, Rf), the sun gear (Sr, Sf), and the carrier (CAr, CAf) are made capable of relative rotation;
wherein the setting apparatus (40, 50) includes a low speed piece (42, 52) disposed so as to be freely rotatable on one side in the axial direction of each ring gear (Rr, Rf) of the first and second auxiliary transmissions (30), a high speed piece (41, 51) that is disposed on the other side in the axial direction of each ring gear (Rr, Rf) and is joined as a single body to the respective carriers (CAr, CAf) of each auxiliary transmission (20, 30), a sleeve (43, 53) that is disposed so as to be slidable in the axial direction so as to link or unlink each ring gear (Rr, Rf) with each low speed piece (42, 52) or each high speed piece (41, 51), a drive mechanism for sliding the sleeve (43, 53), and a state change mechanism (60) for putting each low speed piece (42, 52) in a freely rotatable state or in a non-rotatable state;
and
wherein the state change mechanism (60) includes a first gear (61) that externally contacts and engages with the first auxiliary transmission (20) low speed piece (42), a second gear (62) that externally contacts and engages with the second auxiliary transmission (30) low speed piece (52), a third gear (63) that engages with the first gear (61) and is disposed adjacent to the second gear (62) in the axial direction and is externally provided at the center axis of the second gear (62) so as to be rotatable relative to the second gear (62), a frictionally engaged clutch (64) for establishing a released state in which the second gear (62) and the third gear (63) are separated so as to be rotatable relative to each other and an engaged state in which they are linked as a single body, and an actuator (65) that releases or engages the clutch (64).

2. The vehicle transfer according to claim 1, wherein the power distribution mechanism (4) includes a drive sprocket (4a) that is externally provided to the input shaft (1) so as to be relatively rotatable, a driven sprocket (4b) that is externally provided to the second output shaft (3) so as to be relatively rotatable and is joined as a single body with a member for inputting rotational power to the second auxiliary transmission (30), a wheel-like member (4c) that is placed across both of the sprockets (4a, 4b), a frictionally engaged clutch (4d) for establishing a released state in which the input shaft (1) and the drive sprocket (4a) are separated so as to be rotatable relative to each other and an engaged state in which they are linked as a single body, and an actuator that releases the clutch (4d) when the two-wheel drive mode is required and engages the clutch (4d) when the four-wheel drive mode is required.

3. The vehicle transfer according to claim 1, further comprising:
a rotation differential absorption apparatus (5) for distributing rotational power that is input to the input shaft (1) to the first output shaft (2) and the second output shaft (3) so that the rotational power can be transmitted; and
a switching mechanism (6) for setting, as required, a free state in which a rotation differential absorption operation by the rotation differential absorption apparatus (5) is made active, or a lock state in which that operation is made inactive.

4. The vehicle transfer according to claim 3, wherein:
the rotation differential absorption apparatus (5) is a center differential configured from a planetary gear mechanism that includes a sun gear (Sd) that is joined as a single body with an input side sleeve (11) that is externally fitted on the outer diameter side of the input shaft (1) so as to be capable of relatively rotating, a ring gear (Rd) that is disposed so as to be freely rotatable on the outer diameter side of the sun gear (Sd), a plurality of pinion gears (Pd) that are disposed so as to be capable of turning and revolving between the sun gear (Sd) and the ring gear (Rd), and a carrier (CAd) that supports each of the pinion gears (Pd) and is joined so as to be capable of rotating as a single body with the input shaft (1); and
the switching mechanism (6) includes a lock piece (6a) that is disposed on one side in the axial direction of the ring gear (Rd) of the rotation differential absorption apparatus (5) and is joined as a single body on the outer diameter side of the input side sleeve (11), a sleeve (6b) that is disposed so as to be slidable in the axial direction so as to link or unlink this lock piece (6a) with the ring gear (Rd) of the rotation differential absorption apparatus (5), and a drive mechanism (9) for sliding the sleeve.

5. The vehicle transfer according to claim 3 or 4, wherein:
the first auxiliary transmission (20) is a planetary gear mechanism that includes a sun gear (Sr) that is joined as a single body with a shaft (13) that is provided in the center of the ring gear (Rd) of the rotation differential absorption apparatus (5), a ring gear (Rr) that is disposed so as to be freely rotatable on the outer diameter side of the sun gear (Sr), a plurality of pinion gears (Pr) that are disposed so as to be capable of turning and revolving between the sun gear (Sr) and the ring gear (Rr), and a carrier (CAr) that supports each of the pinion gears (Pr) and is joined as a single body with the first output shaft (2); and
the second auxiliary transmission (30) is a planetary gear mechanism that includes a sun gear (Sf) that is externally fitted to the second output shaft (3) so as to be capable of rotating relative to the second output shaft (3) and is joined as a single body with an output side sleeve (12) that is linked so as to move in cooperation with the input shaft (1) via a power transmission means (4a, 4b, 4c), a ring gear (Rf) that is disposed so as to be freely rotatable on the outer diameter side of the sun gear (Sf), a plurality of pinion gears (Pf) that are disposed so as to be capable of turning and revolving between the sun gear (Sf) and the ring gear (Rf), and a carrier (CAf) that supports each of the pinion gears (Pf) and is combined as a single body with the second output shaft (3); wherein
the setting apparatus (60) has a configuration for, as required, switching to a state in which the ring gear (Rr, Rf) of the respective first and second auxiliary transmissions (30) is made freely rotatable, and then any two of the ring gear (Rr, Rf), the sun gear (Sr, Sf), and the carrier (CAr, CAf) are joined as a single body, or to a state in which the ring gear (Rr, Rf) of the respective first and second auxiliary transmissions (30) is made non-rotatable, and then the ring gear (Rr, Rf), the sun gear (Sr, Sf), and the carrier (CAr, CAf) are made capable of relative rotation.

6. The vehicle transfer according to claim 5, wherein the setting apparatus (40, 50) includes: a low speed piece (42, 52) disposed so as to be freely rotatable on one side in the axial direction of each ring gear (Rr, Rf) of the first and second auxiliary transmissions (30), a high speed piece (41, 51) that is disposed on the other side in the axial direction of each ring gear (Rr, Rf) and is joined as a single body to the respective carriers (CAr, CAf) of each auxiliary transmission, a sleeve (43, 53) that is disposed so as to be slidable in the axial direction so as to link or unlink each ring gear (Rr, Rf) with each low speed piece (42, 52) or each high speed piece (41, 51), a drive mechanism for sliding the sleeve (43, 53), and a state change mechanism for putting each low speed piece (42, 52) in a freely rotatable state or in a non-rotatable state.

7. The vehicle transfer according to claim 6, wherein the state change mechanism (60) includes a first gear (61) that externally contacts and engages with the first auxiliary transmission (20) low speed piece (42), a second gear (62) that externally contacts and engages with the second auxiliary transmission (30) low speed piece (52), a third gear (63) that engages with the first gear (61) and is disposed adjacent to the second gear (62) in the axial direction and is externally provided at the center axis of the second gear (62) so as to be rotatable relative to the second gear, a frictionally engaged clutch (64) for establishing a released state in which the second gear (62) and the third gear (63) are separated so as to be rotatable relative to each other and an engaged state in which they are linked as a single body, and an actuator (65) that releases or engages the clutch (64).

8. The vehicle transfer according to any one of claims 3 to 7, wherein the power distribution mechanism (4) includes a drive sprocket (4a) that is externally provided so as to be rotatable relative to the input side sleeve (11), a driven sprocket (4b) that is externally provided so as to be rotatable relative to the second output shaft (3) and is joined as a single body with a member for inputting rotational power to the second auxiliary transmission (30), a wheel-like member (4c) that is placed across both of the sprockets, a frictionally engaged clutch (4d) for establishing a released state in which the input side sleeve (11) and the drive sprocket (4a) are separated so as to be rotatable relative to each other and an engaged state in which they are linked as a single body, and an actuator (4e) that releases the clutch (4d) when the two-wheel drive mode is required and engages the clutch (4d) when the four-wheel drive mode is required.

9. The vehicle transfer according to any one of claims 1 to 8, further comprising an operation input means (81, 82, 83) that outputs a corresponding signal when operated by a person, and a control apparatus (8) that controls a power transmission path securing operation by a power distribution mechanism (4) or a gearshift operation by an auxiliary gearshift mechanism (7) in response to a signal that is input from the operation input means (81, 82, 83).

## Patentansprüche

1. Fahrzeugverteiler, mit:
einem Leistungsverteilungsmechanismus (4) zum Sichern eines Zweiradantriebsleistungsübertragungspfads, der erlaubt, dass eine zu einer Eingangswelle (1) eingegebene Drehleistung von nur einer ersten Abtriebswelle (2) abgegeben wird, die koaxial mit der Eingangswelle (1) angeordnet ist, oder eines Vierradantriebsleistungsübertragungspfads, der erlaubt, dass die zu der Eingangswelle (1) eingegebene Drehleistung sowohl von der ersten Abtriebswelle (2) wie auch einer zweiten Abtriebswelle (3), die parallel zu der ersten Abtriebswelle (2) angeordnet ist, abgegeben wird; und
einem Hilfsgangschaltmechanismus (7) zum Schalten von Gängen der Drehleistung, die von der Eingangswelle (1) zu der ersten Abtriebswelle (2) oder zu der ersten Abtriebswelle (2) und der zweiten Abtriebswelle (3) übertragen ist; wobei
der Hilfsgangschaltmechanismus (7) ein erstes Hilfsgetriebe (20) hat, das in der ersten Abtriebswelle (2) angeordnet ist, ein zweites Hilfsgetriebe (30), das in der zweiten Abtriebswelle (3) angeordnet ist, und eine Einstellvorrichtung (40, 50), die dafür sorgt, dass das erste Hilfsgetriebe (20) und das zweite Hilfsgetriebe (30) Gangschaltvorgänge durchführen, wie es erforderlich ist,
**dadurch gekennzeichnet, dass**
das erste Hilfsgetriebe (20) ein Planetengetriebemechanismus ist, der ein Sonnenrad (Sr) hat, das als einzelner Körper mit der Eingangswelle (1) gefügt ist, ein Hohlrad (Rr), das angeordnet ist, um frei an der Seite des äußeren Durchmessers des Sonnenrads (Sr) zu drehen, einer Vielzahl von Planetenrädern (Pr), die angeordnet sind, um in der Lage zu sein, sich zwischen dem Sonnenrad (Sr) und dem Hohlrad (Rr) zu drehen und umzulaufen, und einen Träger (CAr), der jedes Planetenrad (Pr) stützt und als einzelner Körper mit der ersten Abtriebswelle (2) gefügt ist;
wobei das zweite Hilfsgetriebe (30) ein Planetengetriebemechanismus ist, der ein Sonnenrad (Sf) hat, das extern an die zweite Abtriebswelle (3) gepasst ist, um in der Lage zu sein, relativ zu der zweiten Abtriebswelle (3) zu drehen und als ein einzelner Körper mit einer abtriebsseitigen Buchse (12) gefügt ist, die verknüpft ist, um sich in Zusammenwirkung mit der Eingangswelle (1) über ein Leistungsübertragungsmittel (4a, 4b, 4c) zu drehen, ein Hohlrad (Rf), das angeordnet ist, um frei drehbar an der Seite des äußeren Durchmessers des Sonnenrads (Sf) zu sein, eine Vielzahl von Planetenrädern (Pf), die angeordnet sind, um in der Lage zu sein, sich zwischen dem Sonnenrad (Sf) und dem Hohlrad (Rf) zu drehen und umzulaufen, und einen Träger (CAf), der jedes Planetenrad (Pf) trägt und als einzelner Körper mit der zweiten Abtriebswelle (3) gefügt ist;
wobei die Einstellvorrichtung (40, 50) eine Anordnung aufweist, um, wenn es erforderlich ist, in einen Zustand umzuschalten, in dem das Hohlrad (Rr, Rf) der entsprechenden ersten und zweiten Hilfsgetriebe (30) frei drehbar gemacht ist, und dann zwei beliebige der Elemente aus dem Hohlrad (Rr, Rf), dem Sonnenrad (Sr, Sf) und dem Träger (CAr, CAf) als einzelner Körper verknüpft sind, oder in einen Zustand, in dem das Hohlrad (Rr, Rf) der entsprechenden ersten und zweiten Hilfsgetriebe (30) nicht drehbar gemacht ist, und dann das Hohlrad (Rr, Rf), das Sonnenrad (Sr, Sf) und der Träger (CAr, CAf) zu einer relativen Drehung in der Lage hergestellt sind;
wobei die Einstellvorrichtung (40, 50) ein Niedrigdrehzahlstück (42, 52) hat, das angeordnet ist, um an einer Seite in der axialen Richtung von jedem Hohlrad (Rr, Rf) des ersten und zweiten Hilfsgetriebes (30) frei drehbar zu sein, ein Hochgeschwindigkeitsstück (41, 51), das an der anderen Seite an der axialen Richtung von jedem Hohlrad (Rr, Rf) angeordnet ist und als einzelner Körper mit den entsprechenden Trägern (CAr, CAf) von jedem Hilfsgetriebe (20, 30) gefügt ist, eine Buchse (43, 53), die angeordnet ist, um in der axialen Richtung gleitfähig zu sein, um jedes Hohlrad (Rr, Rf) mit jedem Niedriggeschwindigkeitsstück (42, 52) oder jedem Hochgeschwindigkeitsstück (41, 51) zu verknüpfen, einen Antriebsmechanismus zum gleiten Lassen der Buchse (43, 53) und einen Zustandsänderungsmechanismus (60), um jedes Stück niedriger Geschwindigkeit (42, 52) in einen frei drehbaren Zustand oder in einen nicht drehbaren Zustand zu versetzen; und
wobei der Zustandsänderungsmechanismus (60) ein erstes Zahnrad (61) hat, das das Stück niedriger Geschwindigkeit (42) des ersten Hilfsgetriebes (20) extern berührt und damit in Eingriff gerät, ein zweites Zahnrad (62), das mit dem Stück niedriger Geschwindigkeit (52) des zweiten Hilfsgetriebes (30) extern in Berührung gerät und in Eingriff gerät, ein drittes Zahnrad (63), das mit dem ersten Zahnrad (61) in Eingriff gerät und angrenzend an das zweite Zahnrad (62) in der axialen Richtung angeordnet ist und extern an der Mittelachse des zweiten Zahnrads (62) bereitgestellt ist, um relativ zu dem zweiten Zahnrad (62) drehbar zu sein, eine Reibeinrückkupplung (64) zum Herstellen eines gelösten Zustands, in dem das zweite Zahnrad (62) und das dritte Zahnrad (63) getrennt sind, um relativ zueinander drehbar zu sein, und einen eingerückten Zustand, in dem diese als einzelner Körper miteinander verknüpft sind, und ein Stellglied (65), das die Kupplung (64) löst oder einrückt.

2. Fahrzeugverteiler nach Anspruch 1, wobei der Leistungsverteilungsmechanismus (4) einen Antriebszahnkranz (4a) hat, der extern an der Eingangswelle (1) bereitgestellt ist, um relativ drehbar zu sein, einen angetriebenen Zahnkranz (4b), der extern an der zweiten Abtriebswelle (3) bereitgestellt ist, um relativ drehbar zu sein, und als einzelner Körper mit einem Element gefügt ist, um eine Drehleistung zu dem zweiten Hilfsgetriebe (30) einzugeben, ein radartiges Element (4c), das quer über beide Zahnkränze (4a, 4b) platziert ist, eine Reibeinrückkupplung (4d) zum Herstellen eines gelösten Zustands, in dem die Eingangswelle (1) und der Antriebszahnkranz (4a) getrennt sind, um relativ zueinander drehbar zu sein und einen eingerückten Zustand, in dem diese als einzelne Körper verknüpft sind, und ein Stellglied, das die Kupplung (4d) löst, wenn die Zweiradantriebsbetriebsart erforderlich ist, und die Kupplung (4d) einrückt, wenn die Vierradantriebsbetriebsart erforderlich ist.

3. Fahrzeugverteiler nach Anspruch 1, außerdem mit:
einer Drehdifferenzialaufnahmevorrichtung (5) zum Verteilen einer zu der Eingangswelle (1), zu der ersten Abtriebswelle (2) und der zweiten Abtriebswelle (3) eingegebenen Drehleistung, so dass die Drehleistung übertragen werden kann; und
einem Umschaltmechanismus (6) zum Einstellen eines freien Zustands, wie es erforderlich ist, in dem ein Drehdifferenzialaufnahmevorgang durch die Drehdifferenzialaufnahmevorrichtung (5) aktiv gemacht ist, oder einem Sperrzustand, in dem der Vorgang inaktiv gemacht ist.

4. Fahrzeugverteiler nach Anspruch 3, wobei:
die Drehdifferenzialaufnahmevorrichtung (5) ein Mitteldifferenzial ist, das aus einem Planetengetriebemechanismus zusammengesetzt ist, der ein Sonnenrad (Sd) hat, das als einzelner Körper mit einer eingangsseitigen Buchse (11) gefügt ist, die extern an der Seite des äußeren Durchmessers der Eingangswelle (1) gepasst ist, um in der Lage zu sein, relativ zu drehen, ein Hohlrad (Rd), das angeordnet ist, um frei an der Seite des äußeren Durchmessers des Sonnenrads (Sd) zu drehen, einer Vielzahl Planentenräder (Pd), die angeordnet sind, um in der Lage zu sein, zwischen dem Sonnenrad (Sd) und dem Hohlrad (Rd) zu drehen und umzulaufen, und einen Träger (CAd), der jedes Planetenrad (Pd) trägt und so gefügt ist, um in der Lage zu sein, als einzelner Körper mit der Eingangswelle (1) zu drehen; und
der Umschaltmechanismus (6), ein Sperrstück (6a) hat, das an einer Seite in der axialen Richtung des Hohlrads (Rd) der Drehdifferenzialaufnahmevorrichtung (5) angeordnet ist und als einzelner Körper an der Außendurchmesserseite der eingangsseitigen Buchse (11) gefügt ist, eine Buchse (6b), die angeordnet ist, um in der axialen Richtung gleitfähig zu sein, um dieses Sperrstück (6a) mit dem Hohlrad (Rd) der Drehdifferenzialaufnahmevorrichtung (5) zu verknüpfen oder davon zu trennen, und einen Antriebsmechanismus (9), um die Buchse gleiten zu lassen.

5. Fahrzeugverteiler nach Anspruch 3 oder 4, wobei:
das erste Hilfsgetriebe (20) ein Planetengetriebemechanismus ist, der ein Sonnenrad (Sr) hat, das als einzelner Körper mit einer Welle (13) gefügt ist, die in der Mitte des Hohlrads (Rd) der Drehdifferenzialaufnahmevorrichtung (5) bereitgestellt ist, ein Hohlrad (Rr), das angeordnet ist, um frei an der Seite des Außendurchmessers des Sonnenrads (Sr) drehbar zu sein, eine Vielzahl von Planetenrädern (Pr), die angeordnet sind, um in der Lage zu sein, zwischen dem Sonnenrad (Sr) und dem Hohlrad (Rr) zu drehen und umzulaufen, und einen Träger (CAr), der jedes der Planetenräder (Pr) trägt und als einzelner Körper mit der ersten Abtriebswelle (2) gefügt ist; und
das zweite Hilfsgetriebe (30), ein Planetengetriebemechanismus ist, der ein Sonnenrad (Sf) hat, das extern an die zweite Abtriebswelle (3) gepasst ist, um in der Lage zu sein, relativ zu der zweiten Abtriebswelle (3) zu drehen und als ein einzelner Körper mit einer abtriebsseitigen Buchse (12) gefügt ist, die verknüpft ist, um in Zusammenarbeit mit der Eingangswelle (1) über ein Leistungsübertragungsmittel (4a, 4b, 4c) zu drehen, ein Hohlrad (Rf), das angeordnet ist, um an der Seite des Außendurchmessers des Sonnenrads (Sf) frei zu drehen, eine Vielzahl von Planetenrädern (Pf), die angeordnet sind, um in der Lage zu sein, zwischen dem Sonnenrad (Sf) und dem Hohlrad (Rf) zu drehen und umzulaufen, und einen Träger (CAf), der jedes der Planetenräder (Pf) trägt und als einzelner Körper mit der zweiten Abtriebswelle (3) kombiniert ist; wobei
die Einstellvorrichtung (60) eine Anordnung aufweist, um, falls dies erforderlich ist, zu einem Zustand umzuschalten, in dem das Hohlrad (Rr, Rf) der entsprechenden ersten und zweiten Hilfsgetriebe (30) frei drehbar gemacht ist, und dann zwei beliebige aus dem Hohlrad (Rr, Rf), dem Sonnenrad (Sr, Sf) und dem Träger (CAr, CAf) als einzelner Körper gefügt sind, oder in einen Zustand, in dem das Hohlrad (Rr, Rf) der entsprechenden ersten und zweiten Hilfsgetriebe (30) nicht drehbar gemacht ist, und dann das Hohlrad (Rr, Rf), das Sonnenrad (Rr, Sf) und der Träger (CAr, CAf) zu einer relativen Drehung in der Lage sind.

6. Fahrzeugverteiler nach Anspruch 5, wobei die Einstellvorrichtung (40, 50) hat: ein Niedriggeschwindigkeitsstück (42, 52), das so angeordnet ist, um frei drehbar an einer Seite in der axialen Richtung von jedem Hohlrad (Rr, Rf) der ersten und zweiten Hilfsgetriebe (30) zu sein, ein Hochgeschwindigkeitsstück (41, 51), das an der anderen Seite in der axialen Richtung von jedem Hohlrad (Rr, Rf) angeordnet ist und als einzelner Körper mit den entsprechenden Trägern (CAr, CAf) von jedem Hilfsgetriebe gefügt ist, eine Buchse (43, 53) die angeordnet ist, um in der axialen Richtung gleitfähig zu sein, um jedes Hohlrad (Rr, Rf) mit jedem Niedriggeschwindigkeitsstück (42, 52) oder jedem Hochgeschwindigkeitsstück (41, 51) zu verknüpfen oder davon zu trennen, einen Antriebsmechanismus zum gleiten Lassen der Buchse (43, 53) und einen Zustandsänderungsmechanismus, um jedes Niedriggeschwindigkeitsstück (42, 52) in einen frei drehbaren Zustand oder in einen nicht drehbaren Zustand zu versetzen.

7. Fahrzeugverteiler nach Anspruch 6, wobei der Zustandsänderungsmechanismus (60) ein erstes Zahnrad (61) hat, das Niedriggeschwindigkeitsstück (42) des ersten Hilfsgetriebes (20) berührt und mit diesem in Eingriff gerät, ein zweites Zahnrad (62), das das Niedriggeschwindigkeitsstück (52) des zweiten Hilfsgetriebes (30) extern berührt und mit diesem in Eingriff gerät, ein drittes Zahnrad (63), das mit dem ersten Zahnrad (61) in Eingriff ist und angrenzend an das zweite Zahnrad (62) in der axialen Richtung angeordnet ist, und extern an der Mittelachse des zweiten Zahnrads (62) bereitgestellt ist, um relativ zu dem zweiten Zahnrad drehbar zu sein, einer Reibeinrückkupplung (64) zum Herstellen eines gelösten Zustands, in dem das zweite Zahnrad (62) und das dritte Zahnrad (63) getrennt sind, um relativ zueinander drehbar zu sein, und eines eingerückten Zustands, in dem diese als ein einzelner Körper verknüpft sind, und ein Stellglied (65), das die Kupplung (64) löst oder einrückt.

8. Fahrzeugverteiler nach einem der Ansprüche 3 bis 7, wobei der Leistungsverteilungsmechanismus (4) einen Antriebszahnkranz (4a) hat, der extern bereitgestellt ist, um relativ zu der eingangsseitigen Buchse (11) drehbar zu sein, einen angetriebenen Zahnkranz (4b) der extern bereitgestellt ist, um relativ zu der zweiten Abtriebswelle (3) drehbar zu sein und als ein einzelner Körper mit einem Element zum Eingeben einer Drehleistung zu dem zweiten Hilfsgetriebe (30) gefügt ist, ein radartiges Element (4c), das quer über beide Zahnkränze platziert ist, eine Reibeinrückkupplung (4d) zum Herstellen eines gelösten Zustands, in dem die eingangsseitige Buchse (11) und der Antriebszahnkranz (4a) getrennt sind, um relativ zueinander drehbar zu sein, und eines eingerückten Zustands, in dem diese als ein einzelner Körper verknüpft sind und ein Stellglied (4e), das die Kupplung (4d) löst, wenn die Zweiradbetriebsart erforderlich ist, und die Kupplung (4d) einrückt, wenn die Vierradbetriebsart erforderlich ist.

9. Fahrzeugverteiler nach einem der Ansprüche 1 bis 8, außerdem mit einem Betätigungseingangsmittel (81, 82, 83), das ein entsprechendes Signal abgibt, wenn es durch eine Person betätigt wird, und einer Steuervorrichtung (8), die einen Leistungsübertragungspfadsicherungsvorgang durch einen Leistungsverteilungsmechanismus (4) oder einen Gangschaltvorgang durch einen Hilfsgangschaltmechanismus (7) in Erwiderung auf ein Signal steuert, das von dem Betätigungseingangsmittel (81, 82, 83) eingegeben ist.

## Revendications

1. Transfert de véhicule, comprenant :
un mécanisme de distribution de puissance (4) pour assurer un chemin de transmission de puissance à deux roues motrices qui permet à une puissance de rotation reçue par un arbre d'entrée (1) d'être délivrée en sortie uniquement à partir d'un premier arbre de sortie (2) qui est disposé coaxialement à l'arbre d'entrée (1), ou un chemin de transmission de puissance à quatre roues motrices qui permet à la puissance de rotation qui est reçue par l'arbre d'entrée (1) d'être délivrée en sortie à la fois du premier arbre de sortie (2) et d'un deuxième arbre de sortie (3) qui est disposé parallèlement au premier arbre de sortie (2) ; et
un mécanisme de changement de vitesse auxiliaire (7) pour changer la vitesse d'une puissance de rotation transmise de l'arbre d'entrée (1) au premier arbre de sortie (2) ou au premier arbre de sortie (2) et au deuxième arbre de sortie (3) ; dans lequel
le mécanisme de changement de vitesse auxiliaire (7) comporte une première transmission auxiliaire (20) qui est disposée dans le premier arbre de sortie (2), une deuxième transmission auxiliaire (30) qui est disposée dans le deuxième arbre de sortie (3), et un appareil de réglage (40, 50) qui amène la première transmission auxiliaire (20) et la deuxième transmission auxiliaire (30) à effectuer des opérations de changement de vitesse selon le besoin
**caractérisé en ce que**
la première transmission auxiliaire (20) est un mécanisme à engrenage planétaire qui comprend un planétaire (Sr) qui est relié en un seul bloc à l'arbre d'entrée (1), une couronne (Rr) qui est disposée de manière à pouvoir tourner librement côté diamètre extérieur du planétaire (Sr), une pluralité d'engrenages à pignons (Pr) qui sont disposés de façon à pouvoir tourner et pivoter entre le planétaire (Sr) et la couronne (RR), et un porte-engrenages (CAr) qui supporte chacun des engranges à pignons (Pr) et est relié en un seul bloc au premier arbre de sortie (2);
où la deuxième transmission auxiliaire (30) est un mécanisme à engrenage planétaire qui comprend un planétaire (Sf) qui est ajusté à l'extérieur du deuxième arbre de sortie (3) de sorte à pouvoir tourner par rapport au deuxième arbre de sortie (3) et est relié en un seul bloc à un manchon côté sortie (12) qui est relié de manière à se déplacer en coopération avec l'arbre d'entrée (1) par l'intermédiaire d'un moyen de transmission de puissance (4a, 4b, 4c), une couronne (Rf) qui est disposée de manière à pouvoir tourner librement côté diamètre extérieur du planétaire (Sf), une pluralité d'engrenages à pignons (Pf) qui sont disposés de façon à pouvoir avoir un mouvement de rotation et de révolution entre le planétaire (SF) et la couronne (Rf), et un porte-engrenages (CAf) qui supporte chacun des engrenages à pignons (Pf) et est relié en un seul bloc au deuxième arbre de sortie (3) ;
où l'appareil de réglage (40, 50) a une configuration lui permettant, en cas de besoin, de passer à un état dans lequel la couronne (Rr, Rf) des première et deuxième transmissions auxiliaires (30) respectives peut tourner librement, et ensuite deux quelconques de la couronne (Rr, Rf), du planétaire (SR, SF), et du porte-engrenages (CAr, CAf) sont reliés en un seul bloc, ou passer à un état dans lequel la couronne (Rr, Rf) des première et deuxième transmissions auxiliaires (30) respectives ne peut pas tourner, et ensuite la couronne (RR, Rf), le planétaire (Sr, Sf), et le porte-engrenages (CAr, CAf) peuvent tourner relativement ;
dans lequel l'appareil de réglage (40, 50) comporte une pièce à faible vitesse (42, 52) disposée de façon à pouvoir tourner librement sur un côté dans la direction axiale de chaque couronne (Rr, Rf) des première et deuxième transmissions auxiliaires (30), une pièce à vitesse élevée (41, 51) qui est disposée sur l'autre côté dans la direction axiale de chaque couronne (Rr, Rf) et est reliée en un seul bloc aux portes-engrenages (CAr, CAf) respectifs de chaque transmission auxiliaire (20, 30), un manchon (43, 53) qui est disposé de manière à pouvoir coulisser dans la direction axiale afin de relier ou séparer chaque couronne (Rr, Rf) de chaque pièce à faible vitesse (42, 52) ou de chaque pièce à vitesse élevée (41, 51), un mécanisme d'entraînement pour faire coulisser le manchon (43, 53), et un mécanisme de changement d'état (60) pour mettre chaque pièce à faible vitesse (42, 52) dans un état de rotation libre ou dans un état sans rotation ;
et
dans lequel le mécanisme de changement d'état (60) comporte un premier engrenage (61) qui rentre en contact de l'extérieur avec la pièce à faible vitesse (42) de la première transmission auxiliaire (20) et s'engage avec celle-ci, un deuxième engrenage (62) qui rentre en contact de l'extérieur avec la pièce à faible vitesse (52) de la deuxième transmission auxiliaire (30) et s'engage avec celle-ci, un troisième engrenage (63) qui s'engage avec le premier engrenage (61) et est disposé adjacent au deuxième engrenage (62) dans la direction axiale et est prévu à l'extérieur au niveau de l'axe central du deuxième engrenage (62) afin de pouvoir tourner par rapport au deuxième engrenage (62), un embrayage (64) engagé par friction pour établir un état dégagé dans lequel le deuxième engrenage (62) et le troisième engrenage (63) sont séparés de manière à pouvoir tourner l'un par rapport à l'autre et un état d'engagement dans lequel ils sont reliés en un seul bloc, et un actionneur (65) qui dégage ou engage l'embrayage.

2. Transfert de véhicule selon la revendication 1, dans lequel le mécanisme de distribution de puissance (4) comprend un pignon de commande (4a) qui est prévu à l'extérieur de l'arbre d'entrée (1) afin d'être relativement rotatif, un pignon de commande (4b) qui est prévu à l'extérieur du deuxième arbre de sortie (3) afin d'être relativement rotatif et est relié en un seul bloc à un élément pour rentrer une puissance de rotation à la deuxième transmission auxiliaire (30), un élément semblable à une roue (4c) qui est placé au travers des deux pignons (4a, 4b), un embrayage engagé par friction (4d) pour établir un état dégagé dans lequel l'arbre d'entrée (1) et le pignon de commande (4a) sont séparés de manière à pouvoir tourner l'un par rapport à l'autre et un état d'engagement dans lequel ils sont reliés en un seul bloc, et un actionneur qui relâche l'embrayage (4d) lorsque le mode à deux roues motrices est demandé et engage l'embrayage (4d) lorsque le mode à quatre roues motrices est demandé.

3. Transfert de véhicule selon la revendication 1, comprenant en outre .
un appareil d'absorption de différentiel de rotation (5) pour distribuer une puissance de rotation qui est reçue par l'arbre d'entrée (1) aux premier (2) et deuxième (3) arbres de sortie de sorte que la puissance de rotation puisse être transmise ; et
un mécanisme de commutation (6) pour régler, en cas de besoin, un état de déverrouillage dans lequel une opération d'absorption de différentiel de rotation par l'appareil d'absorption de différentiel de rotation (5) est activée, ou un état de verrouillage dans lequel cette opération est désactivée.

4. Transfert de véhicule selon la revendication 3, dans lequel :
l'appareil d'absorption de différentiel de rotation (5) est un différentiel central configuré à partir d'un mécanisme à engrenage planétaire qui comporte un planétaire (Sd) qui est relié en un seul bloc à un manchon côté entrée (11) qui est monté à l'extérieur côté diamètre extérieur de l'arbre d'entrée (1) de sorte à pourvoir tourner relativement, une couronne (Rd) qui est disposée de manière à pouvoir tourner librement côté diamètre extérieur du planétaire (SD), une pluralité d'engrenages à pignons (Pd) qui sont disposés de façon à avoir un mouvement de rotation et de révolution entre le planétaire (SD) et la couronne (Rd), et un porte-engrenages (CAd) qui supporte chacun des engrenages à pignons (Pd) et est relié à l'arbre d'entrée (1) de sorte à pouvoir tourner en un seul bloc avec ce dernier ; et
le mécanisme de commutation (6) comporte une pièce de verrouillage (6a) qui est disposée sur un côté dans la direction axiale de la couronne (Rd) de l'appareil d'absorption de différentiel de rotation (5) et est reliée en un seul bloc côté diamètre extérieur du manchon côté entrée (11), un manchon (6b) qui est disposé de manière à pouvoir coulisser dans la direction axiale de manière à relier ou séparer cette pièce de verrouillage (6a) de la couronne (Rd) de l'appareil d'absorption de différentiel de rotation (5), et un mécanisme d'entraînement (9) pour faire coulisser le manchon.

5. Transfert de véhicule selon la revendication 3 ou 4, dans lequel :
la première transmission auxiliaire (20) est un mécanisme à engrenage planétaire qui comprend un planétaire (Sr) qui est relié en un seul bloc à un arbre (13) qui est prévu au centre de la couronne (Rd) de l'appareil d'absorption de différentiel de rotation (5), une couronne (Rr) qui est disposée de manière à pouvoir tourner librement côté diamètre extérieur du planétaire (Sr), une pluralité d'engrenages à pignons (Pr) qui sont disposés de façon à avoir un mouvement de rotation et de révolution entre le planétaire (Sr) et la couronne (RR), et un porte-engrenages (CAr) qui supporte chacun des engrenages à pignons (Pr) et est relié en un seul bloc au premier arbre de sortie (2) ; et
la deuxième transmission auxiliaire (30) est un mécanisme à engrenage planétaire qui comprend un planétaire (Sf) qui est monté à l'extérieur au deuxième arbre de sortie (3) afin de pouvoir tourner par rapport au deuxième arbre de sortie (3) et est relié en un seul bloc à un manchon côté sortie (12) qui est relié de manière à se déplacer en coopération avec l'arbre d'entrée (1) par un moyen de transmission de puissance (4a, 4b, 4c), une couronne (Rf) qui est disposée de manière à pouvoir tourner librement côté diamètre extérieur du planétaire (Sf), une pluralité d'engrenages à pignons (Pf) qui sont disposés de façon à avoir un mouvement de rotation et de révolution entre le planétaire (Sf) et la couronne (Rf), et un porte-engrenages (CAf) qui supporte chacun des engrenages à pignons (Pf) et est combiné en un seul bloc avec le deuxième arbre de sortie (3) ; dans lequel
l'appareil de réglage (60) a une configuration pour, en cas de besoin, passer à un état dans lequel la couronne (Rr, Rf) des première et deuxième transmissions auxiliaire (30) respectives peut tourner librement, et ensuite deux quelconques de la couronne (Rr, Rf), du planétaire (Sr, Sf), et du porte-engrenages (CAr, CAf) sont reliés en un seul bloc, ou passer à un état dans lequel la couronne (Rr, Rf) des première et deuxième transmissions auxiliaires (30) respectives ne peut pas tourner, ensuite la couronne (Rr, Rf), le planétaire (Sr, Sf), et le porte-engrenages (CAr, CAf) peuvent effectuer une rotation relative.

6. Transfert de véhicule selon la revendication 5, dans lequel l'appareil de réglage (40, 50) comprend : une pièce à faible vitesse (42, 52) disposée de façon à pouvoir tourner librement sur un côté dans la direction axiale de chaque couronne (Rr, Rf) des première et deuxième transmissions auxiliaires (30), une pièce à vitesse élevée (41, 51) qui est disposée sur l'autre côté dans la direction axiale de chaque couronne (Rr, Rf) et est reliée en un seul bloc aux portes-engrenages (CAr, CAf) respectifs de chaque transmission auxiliaire, un manchon (43, 53) qui est disposé de manière à pouvoir coulisser dans la direction axiale de manière à relier ou séparer chaque couronne (Rr, Rf) de chaque pièce à faible vitesse (42, 52) ou de chaque pièce à vitesse élevée (41, 51), un mécanisme d'entraînement pour faire coulisser le manchon (43, 53), et un mécanisme de changement d'état pour mettre chaque pièce à faible vitesse (42, 52) dans un état de rotation libre ou dans un état sans rotation.

7. Transfert de véhicule selon la revendication 6, dans lequel le mécanisme de changement d'état (60) comprend un premier engrenage (61) qui rentre en contact de l'extérieur et s'engage avec la pièce à faible vitesse (42) de la première transmission auxiliaire (20), un deuxième engrenage (62) qui rentre en contact de l'extérieur et s'engage avec la pièce à faible vitesse (52) de la deuxième transmission auxiliaire (30), un troisième engrenage (63) qui s'engage avec le premier engrenage (61) et est disposé adjacent au deuxième engrenage (62) dans la direction axiale et est prévu à l'extérieur de l'axe central du deuxième engrenage (62) afin de pouvoir tourner par rapport au deuxième engrenage, un embrayage engagé par friction (64) pour établir un état de dégagement dans lequel le deuxième engrenage (62) et le troisième engrenage (63) sont séparés de manière à pouvoir tourner l'un par rapport à l'autre et d'un état d'engagement dans lequel ils sont reliés en un seul bloc, et un actionneur (65) qui relâche ou engage l'embrayage (64).

8. Transfert de véhicule selon l'une quelconque des revendications 3 à 7, dans lequel le mécanisme de distribution de puissance (4) comprend un pignon de commande (4a) qui est prévu à l'extérieur de façon à pouvoir tourner par rapport au manchon côté entrée (11), un pignon commandé (4b), qui est prévu à l'extérieur de façon à pouvoir tourner par rapport au deuxième arbre de sortie (3) et est relié en un seul bloc à un élément pour rentrer une puissance de rotation à la deuxième transmission auxiliaire (30), un élément semblable à une roue (4c) qui est placé au travers des deux pignons, un embrayage engagé par friction (4d) pour établir un état de dégagement dans lequel le manchon côté entrée (11) et le pignon de commande (4a) sont séparés de manière à tourner l'un par rapport à l'autre et d'un état d'engagement dans lequel ils sont reliés en un seul bloc, et un actionneur (4e) qui relâche l'embrayage (4d) lorsque le mode à deux roues motrices est demandé et engage l'embrayage (4d) lorsque le mode à quatre roues motrices est demandé.

9. Transfert de véhicule selon l'une quelconque des revendications 1 à 8, comprenant en outre un moyen d'entrée de manoeuvre (81, 82, 83) qui émet un signal correspondant lorsqu'il est manoeuvré par une personne, et un appareil de commande (8) qui commande une opération de réglage du chemin de transmission de puissance par un mécanisme de distribution de puissance (4) ou une opération de changement de vitesse par un mécanisme de changement de vitesse auxiliaire (7) en réponse à un signal qui est rentré à partir du moyen d'entrée de manoeuvre (81, 82, 83).
